# EUROPEAN PATENT APPLICATION

(11) **EP 4 779 897 A1**
(43) Date of publication of application: **22.07.2026**
(21) Application number: 23955087.4
(22) Date of filing: 10.10.2023
(51) Int. Cl.: H04B 7/185

(54) **COMMUNICATION METHOD, APPARATUS, READABLE STORAGE MEDIUM, AND COMPUTER PROGRAM PRODUCT**

(71) Applicant: HUAWEI TECHNOLOGIES CO., LTD., Shenzhen 518129 (CN)
(72) Inventor: LUO, Hejia, Shenzhen, Guangdong 518129 (CN); MA, Jianglei, Shenzhen, Guangdong 518129 (CN)
(74) Representative: Pfenning, Meinig & Partner mbB
(86) International application number: PCT/CN2023/123833
(87) International publication number: WO 2025/076699

(57) **Abstract**

A communication method and apparatus, a readable storage medium, and a computer program product are provided, and relate to the communication field, to reduce signaling overheads in a communication process. In this application, a first communication apparatus obtains first configuration information. The first configuration information indicates information about time in which a first satellite apparatus provides a service for a communication apparatus in at least one region. The first communication apparatus obtains first information. The first information indicates a first region, and the first region includes a region in which the first communication apparatus is currently located. The first communication apparatus determines first time information based on the first configuration information and the first information, and performs communication based on the first time information. The first time information includes information about time in which the first satellite apparatus provides a service for a communication apparatus located in the first region. In this solution, a second communication apparatus may not need to frequently send signaling used to update the information about time in which the first satellite apparatus provides a service, thereby reducing signaling overheads.

## Description

### TECHNICAL FIELD

This application relates to the communication field, and in particular, to a communication method and apparatus, a readable storage medium, and a computer program product.

### BACKGROUND

Currently, the 5th generation mobile network (the 5th generation, 5G) new radio (new radio, NR) technology is evolving from Release R18 to Release R19. In addition, the NR technology also enters a commercial deployment phase from a standardization phase. The NR standard protocol can be used for wireless communication technologies designed for terrestrial cellular network scenarios, and can provide ultra-low latency, ultra-high reliability, ultra-high speed, and ultra-large connection wireless communication services for users. In comparison with terrestrial communication, non-terrestrial network (non-terrestrial network, NTN) communication has features such as large coverage and flexible networking, and can achieve seamless global network coverage. The NTN communication includes networking by using devices such as an uncrewed aerial vehicle, a high altitude platform, and a satellite, to provide services such as data transmission and voice communication for user equipment (user equipment, UE).

With the development of NTN, a scale of a satellite network is increasingly large. For example, the satellite network evolves from 66 satellites in the Iridium constellation to 720 satellites in the Oneweb constellation, and extends to more than 12,000 satellites in the Starlink (Starlink) ultra-dense low earth orbit (low earth orbit, LEO) satellite constellation.

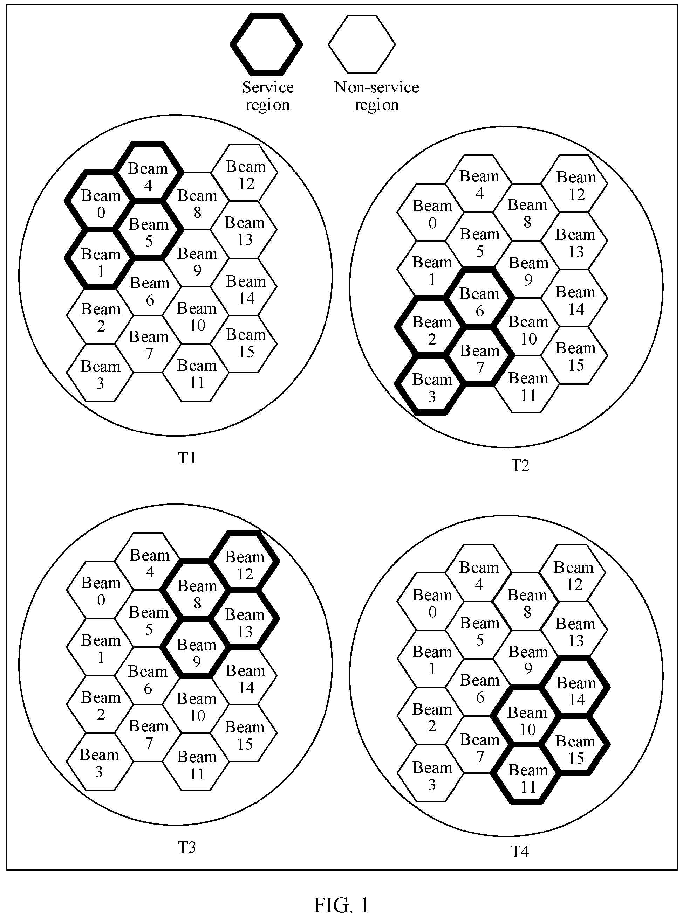

One satellite may cover thousands or even tens of thousands of kilometers, and one beam may cover dozens or even thousands of meters. To support wide coverage of a satellite, dozens, hundreds, or even more beams usually need to be configured for one satellite. To alleviate a contradiction between a small payload and wide coverage of a single satellite, beam hopping may be used for region coverage. To be specific, one satellite may be configured with a large quantity of beams to cover a wide region, but only a small quantity of beams are used at a same moment for region coverage, and the wide region is covered by using the plurality of beams used at different moments. FIG. 1 is a diagram of an example of beam coverage of a satellite. As shown in FIG. 1, 16 beams are configured for one satellite to cover a wide region, but only four beams are used at one moment for region coverage. At a moment T1, four beams numbered 0, 1, 4, and 5 are used for region coverage, and at a moment T2, four beams numbered 2, 3, 6, and 7 are used for region coverage. By analogy, all regions (namely, regions corresponding to the 16 beams) covered by the single satellite are served in a time division manner using T1, T2, T3, and T4. Because beam hopping is used for region coverage, a region may be covered by a beam of the satellite within a period of time, and is not covered by the beam of the satellite within another period of time. In view of the foregoing background, how a communication apparatus communicates with a satellite apparatus becomes an urgent problem to be resolved.

### SUMMARY

This application provides a communication method and apparatus, a readable storage medium, and a computer program product, so that a first communication apparatus determines, based on a region in which the first communication apparatus is currently located, time in which a first satellite apparatus provides a service for the region, and then communicates with the first satellite apparatus within the time, thereby reducing signaling overheads in a communication process.

In a scenario, the first satellite apparatus may use beam hopping for region coverage. A region may be covered by a beam of the first satellite apparatus within a period of time, and is not covered by the beam of the first satellite apparatus within another period of time. A first communication apparatus (for example, a terminal apparatus) in the region can communicate with the first satellite apparatus only within the time in which the region is covered by the beam of the first satellite apparatus. Therefore, the first communication apparatus (for example, the terminal apparatus) needs to obtain information about the time in which the region is covered by the beam of the first satellite apparatus, which may also be understood as that the first communication apparatus (for example, the terminal apparatus) needs to obtain information about time in which the first satellite apparatus provides a service for the region.

In a possible solution, a second communication apparatus (for example, a network apparatus) may send, to the first communication apparatus (for example, the terminal apparatus), information about time in which the first satellite apparatus provides a service for a region. For example, as the communication apparatus moves, after the first communication apparatus (for example, the terminal apparatus) moves to a region, the second communication apparatus (for example, the network apparatus) is triggered to deliver signaling (for example, a SIB message or an RRC configuration message) used to update the service time information of the satellite apparatus. As the communication apparatus moves, the second communication apparatus (for example, the network apparatus) needs to frequently deliver the signaling used to update the service time information of the satellite apparatus. It can be learned that this solution causes large signaling overheads, and overheads of reading the signaling by the first communication apparatus (for example, the terminal apparatus) are also large.

To resolve the foregoing problem, this application provides a solution. In this solution, the first communication apparatus determines, based on a region in which the first communication apparatus is currently located, time in which the first satellite apparatus provides a service for the region, and then communicates with the first satellite apparatus within the time. In this solution, the second communication apparatus (for example, the network apparatus) may not need to frequently send the signaling used to update the information about the time in which the first satellite apparatus provides a service. The first communication apparatus may activate, based on the region in which the first communication apparatus is currently located, the corresponding service time information of the first satellite apparatus. It can be learned that this solution can reduce signaling overheads, and can also reduce overheads of reading the signaling by the first communication apparatus.

According to a **first aspect,** an embodiment of this application provides a communication method. The method is applicable to a first communication apparatus, and the first communication apparatus may be a terminal device or a chip system in a terminal device.

In this solution, the first communication apparatus obtains first configuration information, where the first configuration information indicates information about time in which a first satellite apparatus provides a service for a communication apparatus in at least one region. The first communication apparatus obtains first information, where the first information indicates a first region, the first region includes a region in which the first communication apparatus is currently located, and the first region belongs to the at least one region. The first communication apparatus determines first time information based on the first configuration information and the first information, where the first time information includes information about time in which the first satellite apparatus provides a service for a communication apparatus located in the first region. The first communication apparatus performs communication based on the first time information.

In this solution, the first communication apparatus may activate, based on the region in which the first communication apparatus is currently located, the corresponding service time information of the first satellite apparatus. In this solution, a second communication apparatus may not need to frequently send signaling used to update the information about time in which the first satellite apparatus provides the service, so that signaling overheads can be reduced, and overheads of reading the signaling by the first communication apparatus can also be reduced.

In a possible implementation, the first information includes identification information of a broadcast signal beam and/or identification information of a geographical location. In this way, the first communication apparatus may identify, through an identifier of the received broadcast signal beam, time information that needs to be used, or the first communication apparatus may identify, based on the obtained identification information of the geographical location, time information that needs to be used. It can be learned that in this solution, the service time information of the first satellite apparatus may be configured at a granularity of the broadcast signal beam, or the service time information of the first satellite apparatus may be configured at a granularity of the identification information of the geographical location. In this way, the first communication apparatus may easily obtain the first information, and the service time information of the first satellite apparatus may be configured at a small granularity, so that service time of the first satellite apparatus can better match a factor like service load of a region, thereby optimizing configuration and reducing resource waste.

In a possible implementation, the first time information includes information about time in which the first satellite apparatus performs data transmission with the communication apparatus located in the first region. In this way, when the first communication apparatus is located in the first region, the first communication apparatus may perform data transmission with the first satellite apparatus within time indicated by the first time information, and does not communicate with the first satellite apparatus within time other than the time indicated by the first time information, thereby reducing power consumption of the first communication apparatus.

In a possible implementation, the first configuration information includes information that indicates the first region. In this way, the first communication apparatus may determine, based on the information that indicates the first region, a region to which information that is about time in which the first satellite apparatus provides a service and that is indicated by the first configuration information is applicable. In this way, the information about time in which the first satellite apparatus provides the service can be configured at a granularity of a region.

In a possible implementation, the information that indicates the first region includes identification information of a broadcast signal beam sent by the first satellite apparatus in the first region, and/or identification information of a geographical location of the first region.

It can be learned that in this solution, the service time information of the first satellite apparatus may be configured at a granularity of the broadcast signal beam, or the service time information of the first satellite apparatus may be configured at a granularity of the identification information of the geographical location. In this way, the first communication apparatus may easily obtain the information that indicates the region, and the service time information of the first satellite apparatus may be configured at a small granularity, so that service time of the first satellite apparatus can better match a factor like service load of the region, thereby optimizing configuration and reducing resource waste.

In a possible implementation, the first configuration information includes at least one of the following: information that indicates period duration in which the first satellite apparatus provides a service for a communication apparatus located in the first region; information that indicates service duration in a period in which the first satellite apparatus provides a service for the communication apparatus located in the first region; a period start time offset parameter for the first satellite apparatus to provide a service for the communication apparatus located in the first region; or a service start time offset parameter in a period in which the first satellite apparatus provides a service for the communication apparatus located in the first region.

In a possible implementation, the first satellite apparatus may periodically provide the service for the first region. In this way, after obtaining the first information, the first communication apparatus may query, from the first configuration information based on the first information, time information corresponding to the first information, for example, information about the period duration in which the first satellite apparatus provides a service for the communication apparatus located in the first region and/or information about the service duration in the period in which the first satellite apparatus provides a service for the communication apparatus located in the first region, so that information about time in which the first satellite apparatus provides the service for the communication apparatus in the first region can be determined. In this solution, the first configuration information may indicate, by using a small quantity of data bits, time in which the first satellite apparatus provides a service, so that signaling overheads can be reduced.

In a possible implementation, the service duration in the period in which the first satellite apparatus provides the service for the communication apparatus located in the first region is associated with payload of the first region. For example, the payload of the first region may be positively correlated with duration in which the first satellite apparatus provides a data transmission service for the first region. The duration in which the first satellite apparatus provides a data transmission service is configured based on a factor like the payload of the first region, so that the configured duration in which the first satellite apparatus provides a data transmission service for the first region can be more appropriate, thereby satisfying a service requirement and reducing resource waste.

In a possible implementation, the first time information includes information about time in which the first satellite apparatus sends a broadcast signal to the first region. In this way, when the first communication apparatus is located in the first region, the first communication apparatus may monitor the broadcast signal within the time indicated by the first time information, and does not monitor the broadcast signal within the time other than the time indicated by the first time information, thereby reducing power consumption of the first communication apparatus.

In a possible implementation, the first configuration information includes: information that indicates period duration in which the first satellite apparatus sends the broadcast signal to the first region; a period start time offset parameter for the first satellite apparatus to send the broadcast signal to the first region; or a service start time offset parameter in a period in which the first satellite apparatus sends the broadcast signal to the first region.

In a possible implementation, the first satellite apparatus may periodically send the broadcast signal to the first region. After obtaining the first information, the first communication apparatus may query, from the first configuration information based on the first information, the time information corresponding to the first information, for example, the information that indicates the period duration in which the first satellite apparatus sends the broadcast signal to the first region, so that information about time in which the first satellite apparatus sends a broadcast signal to the communication apparatus in the first region can be determined. In this solution, the first configuration information may indicate, by using a small quantity of data bits, time in which the first satellite apparatus provides a service, so that signaling overheads can be reduced.

In a possible implementation, the information that indicates the period duration in which the first satellite apparatus sends the broadcast signal to the first region includes information that indicates a relationship between the period duration in which the first satellite apparatus sends the broadcast signal to the first region and preset period duration. In this way, the first communication apparatus may indicate, through a small quantity of signaling bits, the period duration in which the first satellite apparatus sends the broadcast signal to the first region. This solution can reduce signaling overheads.

In a possible implementation, the period duration in which the first satellite apparatus sends the broadcast signal to the first region is associated with the payload of the first region. For example, the payload of the first region may be inversely correlated with the period duration in which the first satellite apparatus sends the broadcast signal for the first region. For example, a larger payload of a region indicates shorter duration of one period in which the first satellite apparatus sends a broadcast signal to the region, that is, a higher frequency at which the first satellite apparatus sends a broadcast signal to the region. In other words, for example, a smaller payload of a region indicates longer duration of one period in which the first satellite apparatus sends a broadcast signal to the region, that is, a lower frequency at which the first satellite apparatus sends a broadcast signal to the region. The period duration in which the first satellite apparatus sends the broadcast signal is configured based on a factor like the payload of the first region, so that the configured period duration in which the first satellite apparatus sends the broadcast signal can be more appropriate, thereby satisfying a service requirement and reducing resource waste.

In a possible implementation, the first communication apparatus obtains second configuration information, where the second configuration information indicates information about time in which a second satellite apparatus provides a service for a communication apparatus in a second region, and the second region belongs to a neighboring region of the first region. The first communication apparatus monitors a broadcast signal in the second region within time corresponding to the time information indicated by the second configuration information. The first communication apparatus may include one or more neighboring regions. When the first communication apparatus is located in different regions, different neighboring regions may also be included. If the first communication apparatus performs beam sweeping on all neighboring regions by using a same measurement frequency, coverage time of broadcast signal beams in different neighboring regions may be different. As a result, a large quantity of invalid measurements are caused on a side of the first communication apparatus. In the foregoing solution, for the neighboring region of the first communication apparatus: the second region, the first communication apparatus may perform beam sweeping based on time in which the second satellite apparatus provides a broadcast signal beam for the second region, so that invalid beam sweeping of the first communication apparatus can be reduced, and power consumption can be reduced.

In a possible implementation, the second configuration information includes information that indicates period duration in which the second satellite apparatus sends a broadcast signal to the second region, and/or information that indicates the second region. For related content, refer to the foregoing descriptions of the first configuration information. Similar details are not described again.

According to a **second aspect,** an embodiment of this application provides a communication method. The method is applicable to a second communication apparatus, and the second communication apparatus may be a network device or a chip system in a network device.

In this solution, the second communication apparatus obtains first configuration information. The first configuration information indicates information about time in which a first satellite apparatus provides a service for a communication apparatus in at least one region. The second communication apparatus sends the first configuration information.

In this solution, because the second communication apparatus sends the first configuration information, the first communication apparatus may activate, based on a region in which the first communication apparatus is currently located, the corresponding service time information of the first satellite apparatus. In this solution, the second communication apparatus may not need to frequently send signaling used to update the information about time in which the first satellite apparatus provides the service, so that signaling overheads can be reduced, and overheads of reading the signaling by the first communication apparatus can also be reduced.

For related content included in the first configuration information, refer to related descriptions in the first aspect. Details are not described again.

In a possible implementation, the second communication apparatus obtains second configuration information. The second configuration information indicates information about time in which a second satellite apparatus provides a service for a communication apparatus in a second region, and the second region belongs to a neighboring region of the first region. The second communication apparatus sends the second configuration information. For related content included in the second configuration information, refer to related descriptions in the first aspect. Details are not described again.

According to a **third aspect,** a communication apparatus is provided. The communication apparatus may be the first communication apparatus or the second communication apparatus. The communication apparatus may include a communication unit and a processing unit, to perform either of the first aspect and the second aspect or perform any one of the possible implementations of the first aspect and the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that can be configured to perform either of the first aspect and the second aspect or perform any one of the possible implementations of the first aspect and the second aspect.

According to a **fourth aspect,** a communication apparatus is provided. The communication apparatus may be the first communication apparatus or the second communication apparatus. The communication apparatus may include a processor and a memory, to perform either of the first aspect and the second aspect or perform any one of the possible implementations of the first aspect and the second aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform either of the first aspect and the second aspect or perform any one of the possible implementations of the first aspect and the second aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to a **fifth aspect,** a communication apparatus is provided. The communication apparatus may be the first communication apparatus or the second communication apparatus. The communication apparatus may include a processor, to perform either of the first aspect and the second aspect or perform any one of the possible implementations of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the first communication apparatus or the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a **sixth aspect,** a system is provided. The system includes the first communication apparatus.

In a possible implementation, the system may further include the second communication apparatus.

According to a **seventh aspect,** a computer program product is provided. The computer program product includes a computer program (which may also be referred to as code or instructions). When the computer program is run, a computer is enabled to perform either of the first aspect and the second aspect or perform any one of the possible implementations of the first aspect and the second aspect.

According to an **eighth aspect,** a computer-readable storage medium is provided. The computer-readable medium stores a computer program (which may also be referred to as code or instructions). When the computer program is run on a computer, the computer is enabled to perform either of the first aspect and the second aspect or perform any one of the possible implementations of the first aspect and the second aspect.

According to a **ninth aspect,** a processing apparatus is provided, and includes an interface circuit and a processing circuit. The interface circuit may include an input circuit and an output circuit. The processing circuit is configured to: receive a signal through the input circuit, and transmit a signal through the output circuit, so that either of the first aspect and the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is the first communication apparatus or the second communication apparatus, the interface circuit may be a radio frequency processing chip in the first communication apparatus or the second communication apparatus, and the processing circuit may be a baseband processing chip in the first communication apparatus or the second communication apparatus.

In another implementation, the communication apparatus may be a part of components, for example, an integrated circuit product like a system chip or a communication chip, in the first communication apparatus or the second communication apparatus. The interface circuit may be an input/output interface, an interface circuit, an output circuit, an input circuit, a pin, a related circuit, or the like in the chip or a chip system. The processing circuit may be a logic circuit on the chip.

### BRIEF DESCRIPTION OF DRAWINGS

FIG. 1 is a diagram of beam coverage of a satellite;
FIG. 2A is a diagram of a network architecture of a communication system to which an embodiment of this application is applicable;
FIG. 2B is a diagram of a network architecture of another communication system to which an embodiment of this application is applicable;
FIG. 3A is a diagram of a possible operating mode of a satellite to which an embodiment of this application is applicable;
FIG. 3B is a diagram of another possible operating mode of a satellite to which an embodiment of this application is applicable;
FIG. 4 is a possible schematic flowchart of a communication method according to an embodiment of this application;
FIG. 5 is a possible diagram of a plurality of regions covered by beams of a first satellite apparatus according to an embodiment of this application;
FIG. 6 is a diagram of several possible data signal beams in a scenario provided in FIG. 5 according to an embodiment of this application;
FIG. 7 is a possible diagram of a broadcast signal beam according to an embodiment of this application;
FIG. 8 is another possible diagram of a broadcast signal beam according to an embodiment of this application;
FIG. 9 is a possible schematic flowchart of a communication method according to an embodiment of this application;
FIG. 10 is a diagram of a possible structure of a communication apparatus according to an embodiment of this application; and
FIG. 11 is a diagram of a possible structure of another communication apparatus according to an embodiment of this application.

### DESCRIPTION OF EMBODIMENTS

The following describes terms and nouns used in embodiments of this application.

### (1) Beam

The beam may be represented in an NR protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by a transmission configuration indicator state (TCI-state) parameter or a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a TCI-state (a DL TCI-state or an UL TCI-state), a spatial relation, or the like. The foregoing terms are also equivalent to each other. Alternatively, the beam may be replaced with another term for representing a beam. This is not limited in this application.

The beam may include a beam used to send a signal and/or a beam used to receive a signal. A transmit beam may refer to distribution of signal strength formed in different directions in space after a signal is transmitted through an antenna, and a receive beam may refer to distribution of signal strength, in different directions in space, of a radio signal received from an antenna.

The beam usually corresponds to a resource. For example, during beam measurement, a network device sends different beams by using different resources, a terminal device feeds back measured resource quality, and the network device knows quality of a corresponding beam. During data transmission, beam information is also indicated by a resource corresponding to the beam information. For example, the network device indicates information about a physical downlink shared channel (Physical Downlink Shared Channel, PDSCH) beam of the terminal device by using a transmission configuration indicator (Transmission Configuration Index, TCI) field in downlink control information (downlink control information, DCI).

Optionally, a plurality of beams having same or similar communication features are considered as one beam. One beam may include one or more antenna ports, configured to transmit a data channel, a control channel, a sounding signal, and the like. The one or more antenna ports forming one beam may also be considered as one antenna port set.

### (1.1) Broadcast signal beam

The broadcast signal beam is a beam of a broadcast signal sent by a first satellite apparatus.

The broadcast signal may include, for example, a synchronization signal block (synchronization signal and PBCH Block, SSB), and the SSB includes at least one of a primary synchronization signal (primary synchronization signal, PSS), a secondary synchronization signal (secondary synchronization signal, SSS), and a physical broadcast channel (physical broadcast channel, PBCH). Identification information of the broadcast signal beam may be indicated by using an identifier of the SSB. In some systems, broadcast signals are also referred to as beacon (beacon) signals.

The PSS may be used to transmit a cell identifier, and the SSS may be used to transmit a cell group identifier. The cell identifier and the cell group identifier jointly determine a plurality of physical cell identities (physical cell identity, PCI) in a mobile communication system. Once a terminal device successfully finds the PSS and the SSS, the terminal device learns of a physical cell identity of a carrier carrying the PSS and the SSS, and therefore, has a capability of parsing a system information included in the SSB.

The system information in the SSB may be carried in the PBCH. The information is information necessary for accessing a network by the terminal device, and therefore, may be referred to as a master information block (main information block, MIB). The MIB may include a system frame number, a subcarrier spacing in initial access, and the like.

The MIB includes information that is limited and is not enough to support the terminal device in accessing a cell. Therefore, the terminal device may further obtain other system information, for example, a system information block (system information block, SIB) 1. The SIB 1 may be transmitted on a physical downlink shared channel (physical downlink shared channel, PDSCH) in a period of 160 milliseconds (ms). The terminal device may obtain, from the MIB carried in the PBCH, a parameter used for transmitting the SIB 1, to receive the SIB 1. In this way, the terminal device can obtain the system information required for accessing the cell, and can subsequently access the cell.

### (1.2) Data signal beam

The data signal beam is a beam corresponding to data transmitted between a first satellite apparatus and a first communication apparatus (for example, a terminal). The data signal beam may include an uplink data signal beam and/or a downlink data signal beam.

### (2) Beam sweeping

If a satellite apparatus (for example, a first satellite apparatus) may concentrate energy in a direction in a time unit, a signal can be sent farther in this direction while the signal cannot be received in another direction. A signal is sent in another direction in a next time unit. Finally, a plurality of regions are covered by continuously change a direction of a beam.

### (3) Region

Region: Unless otherwise specified, a "region" in the following embodiments of this application refers to a geographical region. The region is fixed relative to the earth, or it is understood as that the region refers to a geographical region fixed relative to the earth. For example, the region may have at least one of the following attributes: a shape, a contour, a size, a radius, an area, a geographical location, and other attributes.

The "region" may further have a height attribute, that is, the region may be understood as a geographical region with a given height or within a height range. By default, the region may be a geographical region with an altitude of 0 kilometers (km) or about 0 km (for example, within a range of [-2, 2] km) on the ground, or a geographical region with an average altitude. In addition, the geographical region may alternatively be another geographical region with a specific height or within a specific height range, for example, a geographical region with an altitude of 10 km, or a geographical region with an altitude of about 10 km (for example, within a range of [7, 13] km).

In a possible implementation, the region fixed relative to the earth may also be referred to as a "beam position", a "geographical region", or the like. Certainly, the region may have another name. A name of the region fixed relative to the earth is not specifically limited in this application.

Shapes, contours, sizes, radii, and areas of different regions may be the same or may be different. Different regions have different geographical locations. Different regions may overlap or may not overlap.

In a possible implementation, that the region is fixed relative to the earth may be understood as that a contour, a size, or a geographical location of the region remains unchanged. For example, the contour, the size, or the geographical location of the region does not change with time. Alternatively, that the region is fixed relative to the earth may be understood as that a contour of the region and points in the region may be described by using an earth-fixed coordinate system, or coordinates of each point in a contour of the region in an earth-fixed coordinate system are constant.

In a possible implementation, a shape of the region may be a regular hexagon, or another shape like a regular pentagon, a circle, or an ellipse. Alternatively, a shape of the region may be an irregular shape. This is not limited.

For example, the shape of the region may be defined in a protocol, or may be defined by a network device. Shapes of regions defined by different network devices may be the same or may be different. Shapes of a plurality of regions may also be defined by a same network device. Similarly, the size, the radius, and the area of the region may also be defined in a protocol, or may be defined by the network device. Sizes, radii, and areas of regions defined by different network devices may be the same or may be different. Sizes of a plurality of regions, radii of a plurality of regions, or areas of a plurality of regions may also be defined by a same network device.

In a possible implementation, the earth surface may be divided into a plurality of regions, and the plurality of regions are indexed (for example, numbered). The terminal device and the network device may agree on a numbering manner (for example, numbering from 1 or numbering from 0) of these regions and a correspondence between a region and an index. Alternatively, a protocol may define a numbering manner of these regions and a correspondence between a region and an index. Information such as a geographical location of a region may be determined based on an index of the region.

Optionally, the plurality of regions obtained through division may completely cover the earth surface, for example, any location on the earth surface belongs to a region; or the plurality of regions obtained through division may cover a part of geographical locations on the earth, for example, the plurality of regions may not cover the south pole and/or the north pole of the earth, that is, the region may not exist in the south pole and/or the north pole.

Optionally, a manner of obtaining the plurality of regions through division may be defined in a protocol, or may be defined by the network device. Division manners defined by different network devices may be the same or may be different. A plurality of division manners may also be defined by a same network device.

In a first possible division manner, the earth surface may be divided by using a longitude and latitude grid with one granularity. For example, the earth surface may be divided by using a longitude and latitude grid with a granularity of 1 degree. If only such a discrete manner is used, the world may be divided into 360 × 360 = 129600 regions, and the terminal device and the network device may agree on indexes of the 129600 regions as 0,1, ...,129599, or 1,2, ... ,129600.

Optionally, after the height attribute of the geographical region is introduced, a plurality of grids may be defined to divide the earth surface. For example, based on a grid at an altitude of 0 km or within a range of [-2, 2] km, the earth surface may be divided by using the longitude and latitude grid with the granularity of 1 degree, to generate 129600 regions. At an altitude of 10 km or within an altitude range of [7, 13] km, the longitude and latitude grid with the granularity of 1 degree is used for division to generate 129600 regions. When these regions are indexed, an index range needs to be extended. For example, total indexes are 0,1, ...,129599, 129600, 129601, ..., 259199, where the first 129600 sequence numbers indicate indexes of regions at the altitude of 0 km or within the altitude range of [-2, 2] km, and the last 129600 sequence numbers indicate indexes of regions at the altitude of 10 km or within the altitude range of [7, 13] km.

For example, the granularity of the longitude and latitude grid may be determined based on a type of the network device. For example, when the network device is an LEO satellite, a small granularity may be used for discretization; or when the network device is a geostationary earth orbit (geosynchronous earth orbit, GEO) satellite, a large granularity may be used for discretization.

In a second possible division manner, the earth surface may be divided by using longitude and latitude grids with a plurality of granularities. For example, a part of the earth surface or a part of administrative regions is divided by using a longitude and latitude grid with a granularity of 1 degree, and another part of the earth surface or another part of administrative regions is divided by using a longitude and latitude grid with a granularity of 2 degrees.

Alternatively, after the height attribute of the geographical region is introduced, the earth surface may be divided by using a longitude and latitude grid with a granularity of 1 degree at an altitude of 0 km, and the earth surface may be divided by using a longitude and latitude grid with a granularity of 2 degrees at an altitude of 10 km.

In a third possible division manner, the earth surface may be divided based on administrative regions. For example, a rural administrative region is considered as a region.

In a fourth possible division manner, for a GEO satellite, a projection of a beam of the GEO satellite on the ground may be considered as a region. Since the GEO satellite is stationary relative to the earth, it may be considered that the projection of the beam of the GEO satellite on the ground is fixed relative to the earth.

In actual application, the earth surface may be divided in a plurality of division manners. For example, a part of the earth surface or a part of administrative regions is divided by using the longitude and latitude grid with the granularity of 1 degree, and another part of the earth surface or another part of administrative regions is divided based on the administrative regions.

In a possible implementation, when the earth surface is divided into a plurality of regions, different levels of region division may be performed on a same surface range. For example, for a surface range, first-level region division may be performed by using a longitude and latitude grid with a granularity of 10 degrees, second-level region division may be performed by using a longitude and latitude grid with a granularity of 6 degrees, and third-level region division may be performed by using a longitude and latitude grid with a granularity of 1 degree. In this case, in the surface range, a quantity of regions at a first level is greater than a quantity of regions at a second level, and the quantity of regions at the second level is greater than a quantity of regions at a third level. In addition, in this scenario, regions at each level may be separately numbered.

The technical solutions in embodiments of this application may be applied to various communication systems, for example, a terrestrial communication system and an NTN communication system such as a satellite communication system. The satellite communication system may be integrated with a mobile communication system. For example, the mobile communication system may be a 4th generation (4th Generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), and a future mobile communication system. The mobile communication system may alternatively be a vehicle to everything (vehicle to everything, V2X) system or an Internet of things (internet of things, IoT) system.

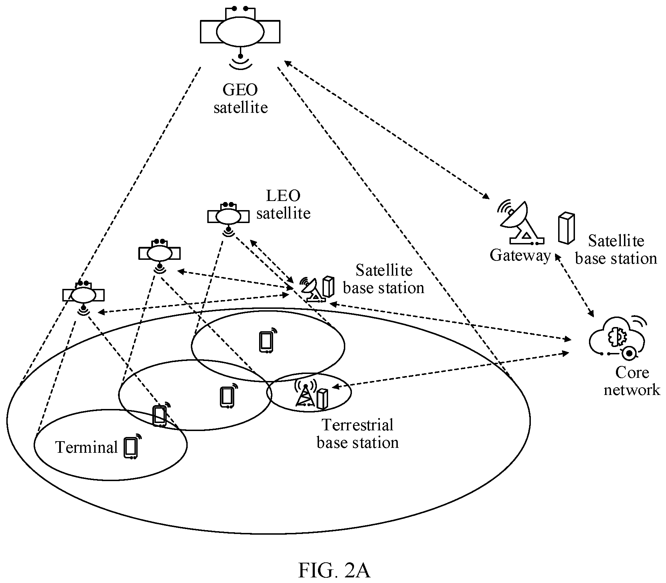

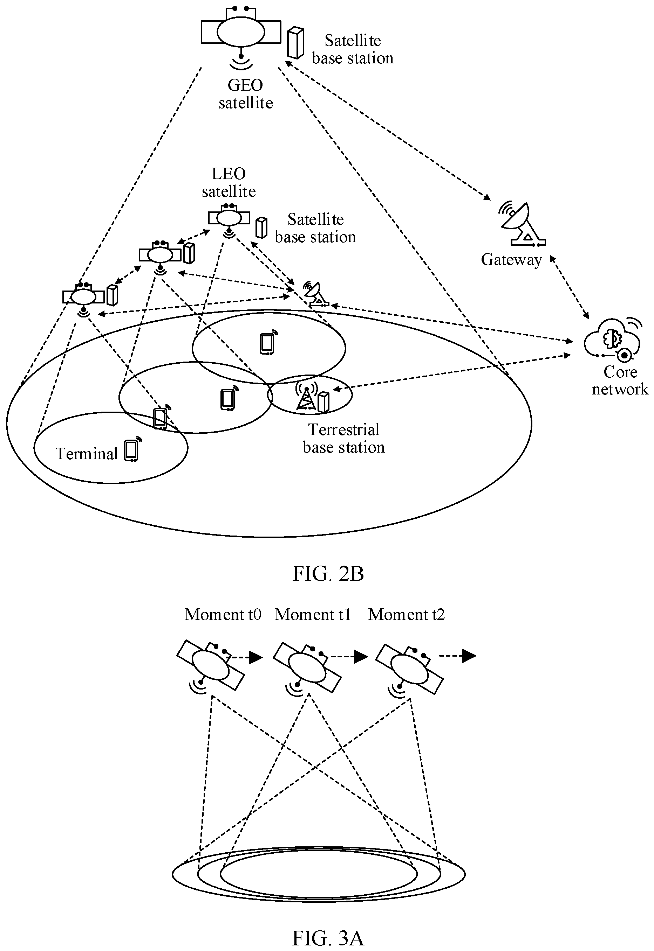

FIG. 2A and FIG. 2B show examples of diagrams of network architectures of several communication systems to which embodiments of this application are applicable. The communication system may include a satellite, a network device, a terminal device, and the like. The communication system may further include a gateway and a core network device. FIG. 2A and FIG. 2B show examples of converged network architectures of an NTN and a terrestrial network. The following provides descriptions with reference to the accompanying drawings.

### (1) Satellite

The satellite may be a highly elliptical orbit (highly elliptical orbiting, HEO) satellite, a GEO satellite, a medium earth orbit (medium earth orbit, MEO) satellite, and a low-earth orbit (low-earth orbit, LEO) satellite. An operating mode of the satellite is not limited in embodiments of this application. For example, the operating mode of the satellite may be a transparent (transparent) mode, or may be a regenerative (regenerative) mode. FIG. 2A is shown by using an example in which the operating mode of the satellite is the transparent mode, and FIG. 2B is shown by using an example in which the operating mode of the satellite is the regenerative mode.

When the satellite operates in the transparent (transparent) mode, the satellite has a relay and forwarding function. The gateway has a function of a network device (for example, a base station) or some functions of a network device (for example, a base station). In this case, the gateway may be considered as the network device (for example, the base station). Alternatively, a network device (for example, a base station) and the gateway may be separately deployed. In this case, feeder link latency includes two parts: latency from the satellite to the gateway and latency from the gateway to a gNB. In the transparent mode discussed below, a case in which the gateway and the gNB are located together or close to each other is used as an example. If the gateway is far away from the gNB, the latency from the satellite to the gateway and the latency from the gateway to the gNB are added to obtain the feeder link latency.

When the satellite operates in the regenerative (regenerative) mode, the satellite has a data processing capability, and has a function of a network device (for example, a base station) or some functions of a network device (for example, a base station). In this case, the satellite may be considered as the network device (for example, the base station).

The satellite may perform wireless communication with the terminal device via a broadcast communication signal, a navigation signal, and the like. Optionally, each satellite may provide a communication service, a navigation service, a positioning service, and the like for the terminal device via a plurality of beams. For example, each satellite uses a plurality of beams to cover a service region, and a relationship between different beams may be one or more of time division, frequency division, and space division. In addition, the satellite may further operate in a quasi earth-fixed (quasi earth-fixed) mode or a satellite-fixed (satellite-fixed) mode.

The quasi earth-fixed mode may also be referred to as a gaze mode, and means that a beam direction of a satellite is dynamically adjusted, so that the satellite continuously serves a physical region in a time period. FIG. 3A is a diagram of an example of a possible operating mode of a satellite. As shown in FIG. 3A, within a period of time (for example, a moment t0, a moment t1, and a moment t2), the satellite dynamically adjusts a beam direction, so that the beam approximately covers a same region on the ground. In practice, due to a problem of beam direction precision and a problem of distortion of beam projections at different incident angles on the ground, a coverage region of a gazing beam may have some degree of temporal jitter.

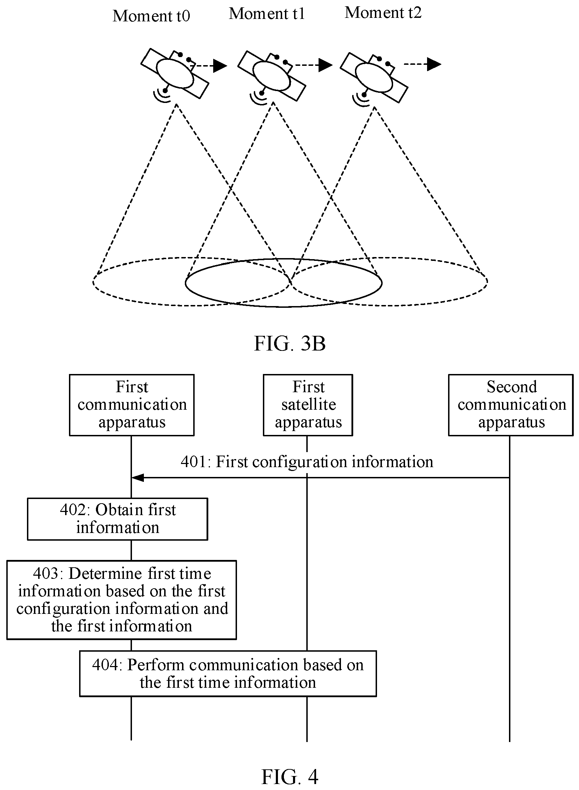

In the satellite-fixed mode, a beam of a satellite moves with the satellite, and the physical region served by the satellite also changes continuously. FIG. 3B is a diagram of an example of a possible operating mode of a satellite. As shown in FIG. 3B, within a period of time (for example, a moment t0, a moment t1, and a moment t2), coverage of a satellite beam moves with the satellite.

### (2) Gateway

The gateway (or referred to as a ground station, an earth station, a signal gateway station, or a gateway station) (gateway) may be configured to connect a satellite to a terrestrial network device (for example, a terrestrial base station). One or more satellites may be connected to one or more terrestrial network devices (for example, terrestrial base stations) through one or more gateways. This is not limited herein.

A link between the satellite and the terminal is referred to as a service link (service link), and a link between the satellite and the gateway is referred to as a feeder link (feeder link). The network device and the gateway may be separately deployed. In this case, feeder link latency may include two parts: latency from the satellite to the gateway and latency from the gateway to the network device.

### (3) Network device

The network device in embodiments of this application may include a network device deployed on a satellite (for example, a satellite base station), or may include a network device deployed on a gateway, or may include a network device deployed on the ground (for example, a terrestrial base station).

The network device in embodiments of this application may be a radio access network (radio access network, RAN) node. The RAN may be an evolved universal terrestrial radio access (evolved universal terrestrial radio access, E-UTRA) system, an NR system, and a future radio access system defined in a 3rd generation partnership project (3rd generation partnership project, 3GPP). The RAN may alternatively include the foregoing two or more different radio access systems. The RAN may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station, or may be a micro base station or an indoor base station, or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

### (4) Core network (core network, CN) device

The core network device is a device that is disposed on the ground and can communicate with an NTN device in an NTN system. The CN device is a network element included in a CN part in a mobile communication system. The CN device can connect a terminal device to different data networks, and perform services such as authentication, charging, mobility management, session management, policy control, and user plane forwarding. The CN device may be a CN device in a current mobile communication system (for example, a 5th generation (5th generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4th generation (4th generation, 4G) mobile communication system (namely, long term evolution (long term evolution, LTE)), a network element responsible for functions such as access control, security control, and signaling coordination is a mobility management entity (Mobile management entity, MME), a network element used as a local mobility management anchor is a serving gateway (serving gateway, S-GW), a network element used as a handover anchor of an external data network and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging rule function (policy and charging rule function, PCRF) network element.

For another example, in a 5G mobile communication system, based on specific logical function division, a core network may be divided into a control plane (control plane, CP) and a user plane (user plane, UP). In the CN, a network element responsible for a control plane function may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for functions such as subscription data management and user access authorization is referred to as a unified data management (unified data management, UDM) network element, a network element responsible for charging and policy control functions is referred to as a policy control function (Policy and charging function, PCF) network element, and a network element responsible for transmitting a requirement of an application side for a network side is an application function (application function, AF) network element.

### (5) Terminal

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

Embodiments of this application are also applicable to another communication system architecture, for example, an air to ground (air to ground, ATG) communication system. The communication system includes at least one network device and at least one high altitude terminal. The high altitude terminal includes, for example, a high altitude aircraft and an on-board terminal. The satellite in FIG. 2A and FIG. 2B may alternatively be replaced with another relay device, for example, may be replaced with another NTN device like a high altitude platform station (high altitude platform station, HAPS). The communication system shown in FIG. 2A or FIG. 2B is used as an example, and constitutes no limitation on a communication system to which the method provided in embodiments of this application is applicable.

Based on content shown in FIG. 2A, FIG. 2B, FIG. 3A, FIG. 3B, and the foregoing other content, FIG. 4 is a possible schematic flowchart of an example of a communication method according to an embodiment of this application. For ease of understanding, interaction between a first communication apparatus, a second communication apparatus, and a first satellite apparatus is used as an example for description in FIG. 4. The first satellite apparatus in embodiments of this application may be the satellite in FIG. 2A, FIG. 2B, FIG. 3A, or FIG. 3B, or a chip system inside the satellite. The first communication apparatus may be the terminal in FIG. 2A, FIG. 2B, FIG. 3A, or FIG. 3B, or a chip system inside the terminal. The second communication apparatus may be the network device in FIG. 2A, FIG. 2B, FIG. 3A, or FIG. 3B, or a chip system inside the network device.

As shown in FIG. 4, the method includes step 401, step 402, step 403, and step 404. The following provides descriptions with reference to the accompanying drawings.

**Step 401:** The second communication apparatus sends first configuration information.

There are a plurality of manners in which the first communication apparatus obtains the first configuration information. For example, in the solution provided in step 401, after obtaining the first configuration information, the second communication apparatus may send the first configuration information, and correspondingly, the first communication apparatus may receive the first configuration information from the second communication apparatus. For another example, the first configuration information may be preconfigured. In this case, step 401 may not be performed.

The first configuration information indicates information about time in which the first satellite apparatus provides a service for a communication apparatus in at least one region. The second communication apparatus may configure, for the first communication apparatus through signaling such as SIB or RRC, information about time in which the first satellite apparatus associated with one or more regions provides a service. Information about time in which the first satellite apparatus associated with one region provides a service may also be referred to as a beam parameter set.

In a possible implementation, the first configuration information may include information that indicates the at least one region. The first configuration information may further include information about time in which the first satellite apparatus provides a service. The first configuration information may further include an association relationship between the information that indicates the at least one region and the information about the time in which the first satellite apparatus provides a service, so that the first communication apparatus may determine, from the first configuration information, the information about the time in which the first satellite apparatus associated with one region provides the service. The information about the time in which the first satellite apparatus provides a service may further include information about time in which the first satellite apparatus provides a data signal beam, and/or information about time in which the first satellite apparatus provides a broadcast signal beam.

Content included in the first configuration information is separately described below by using Implementation A, Implementation B, and Implementation C. In Implementation A, the information that is included in the first configuration information and that indicates the at least one region is described. In Implementation B, the information that is included in the first configuration information and that is about the time in which the first satellite apparatus provides a data signal beam is described. In Implementation C, the information that is included in the first configuration information and that is about the time in which the first satellite apparatus provides a broadcast signal beam is described. Information involved in the following Implementation A, Implementation B, and Implementation C may be all included in the first configuration information, or partially included in the first configuration information. For example, the first configuration information may include information that indicates the information about the time in which the first satellite apparatus provides a data signal beam, and the information that indicates the at least one region. Alternatively, the first configuration information may include the information about the time in which the first satellite apparatus provides a broadcast signal beam, and the information that indicates the at least one region.

**Implementation A:** The first configuration information includes the information that indicates the at least one region.

The information that is included in the first configuration information and that indicates the at least one region may have a plurality of possible implementations. For example, the information that indicates the at least one region may include at least one of identification information of a broadcast signal beam, identification information of a geographical location, or other information. For example, the at least one region includes a first region. Information that is included in the first configuration information and that indicates the first region may include identification information of a broadcast signal beam sent by the first satellite apparatus in the first region, and/or identification information of a geographical location of the first region.

For example, identification information of a broadcast signal beam in one region may include an SSB associated with the broadcast signal beam. A plurality of regions may respectively correspond to a plurality of SSBs, so that the first communication apparatus can identify different regions based on the SSBs.

In a possible implementation, the identification information of the geographical location may include a geographical grid number. The identification information of the geographical location may also include information that indicates an administrative unit attribute of a region. For example, the identification information of the geographical location includes information such as a street, a district, a county, or a town to which the current region belongs. When the identification information of the geographical location is used as information that indicates a region, the first satellite apparatus may set service time of each region at a granularity of the geographical location, so that a granularity of setting the service time can be reduced. Further, the service time of each region can better match a requirement of the region.

**Implementation B:** The first configuration information includes the information about the time in which the first satellite apparatus provides a data signal beam.

In Implementation B, the information about the time in which the first satellite apparatus provides a data signal beam may be understood as information about time in which the first satellite apparatus provides data signal beam coverage for a region, or may be understood as information about time in which a communication apparatus located in a region can perform data transmission with the first satellite apparatus. Within time in which the first satellite apparatus does not send a data signal beam to the region, the communication apparatus located in the region cannot perform data transmission with the first satellite apparatus.

For a region, the first satellite apparatus may also periodically provide a service for the region. For example, the first satellite apparatus may periodically provide an uplink and/or downlink data transmission service for a communication apparatus in the region. For example, the region is the first region. The first configuration information may include one or more of the following: information (information B1) that indicates period duration in which the first satellite apparatus provides a service for a communication apparatus located in the first region; information (information B2) that indicates service duration in a period in which the first satellite apparatus provides a service for a communication apparatus located in the first region; a period start time offset parameter (information B3) for the first satellite apparatus to provide a service for a communication apparatus located in the first region; or a service start time offset parameter (information B4) in a period in which the first satellite apparatus provides a service for a communication apparatus located in the first region.

**The information B1** is the information that indicates the period duration in which the first satellite apparatus provides a service for the communication apparatus located in the first region.

The information B1 may alternatively be replaced with information that indicates period duration in which the first satellite apparatus provides a data transmission service (or provides a data signal beam) for the first region. The first satellite apparatus may periodically provide a service for the first region, and the information B1 may be understood as duration of one period in which the first satellite apparatus provides a service for the first region. In embodiments of this application, duration of periods for providing services that is configured by the first satellite apparatus for two regions may be the same or may be different.

**The information B2** is the information that indicates the service duration in the period in which the first satellite apparatus provides a service for the communication apparatus located in the first region.

The first satellite apparatus may periodically provide a service for the first region, and the information B2 may be understood as information about duration in which the first satellite apparatus provides a service for the first region in one period. The information B2 occupies a small quantity of bits. In other words, the first configuration information may indicate, by using a small quantity of data bits, time in which the first satellite apparatus provides a service, so that signaling overheads can be reduced.

In embodiments of this application, duration of periods for providing services that is configured by the first satellite apparatus for two regions may be the same or may be different. In a possible implementation, for a region in the at least one region, duration in which the first satellite apparatus provides a service for a communication apparatus in the region is associated with a payload of the region. As an example, the duration in which the first satellite apparatus provides a service for the communication apparatus in the region is positively correlated with the payload of the region. For example, a larger payload of a region indicates longer duration in which the first satellite apparatus provides a service for a communication apparatus in the region. In other words, for example, a smaller payload of a region indicates shorter duration in which the first satellite apparatus provides a service for a communication apparatus in the region. For another example, several payload ranges may be set. A larger maximum value of a payload range associated with a region indicates longer duration in which the first satellite apparatus provides a service for a communication apparatus in the region. In other words, a smaller maximum value of a payload range associated with a region indicates shorter duration in which the first satellite apparatus provides a service for a communication apparatus in the region. The duration in which the first satellite apparatus provides a data transmission service is configured based on a factor like a payload of the first region, so that the configured duration in which the first satellite apparatus provides a data transmission service for the first region can be more appropriate, thereby satisfying a service requirement and reducing resource waste.

In another possible implementation, the information about the time in which the first satellite apparatus provides (sends and/or receives) a data signal beam may include uplink time information and/or downlink time information. Within time indicated by the uplink time information, a communication apparatus in a region may perform uplink transmission through the first satellite apparatus. Within time indicated by the downlink time information, the communication apparatus in the region may perform downlink transmission through the first satellite apparatus. Time in which the first satellite apparatus provides a service and that is indicated by the time information in embodiments of this application may be time in which the first satellite apparatus provides an uplink transmission service and/or a downlink transmission service.

**The information B3** is the period start time offset parameter for the first satellite apparatus to provide a service for the communication apparatus located in the first region.

The period start time offset parameter may indicate a start moment (or absolute start time) of one period in which the first satellite apparatus provides a service for the communication apparatus located in the first region. For differentiation, the absolute start time of the period may be referred to as first start time.

Alternatively, the period start time offset parameter may indicate duration. The first start time may be determined based on the period duration (information B1) of the period in which the first satellite apparatus provides a service for the communication apparatus located in the first region and the period start time offset parameter (information B3) for the first satellite apparatus to provide a service for the communication apparatus located in the first region.

For example, a first specified condition is: [(System frame number×10)+Subframe number] modulo (Period duration (Information B1))=Service start time offset parameter. In this case, the first start time is subframe start time that satisfies the first specified condition. It should be noted that modulo is a modulo operator. The first specified condition may be a condition in embodiments of the present invention, or may be another condition. This is not specifically limited herein.

**The information B4** is the service start time offset parameter in the period in which the first satellite apparatus provides a service for the communication apparatus located in the first region.

The information B4 may alternatively be understood as a service start time offset parameter in one period in which the first satellite apparatus provides a service for the communication apparatus located in the first region.

Service start time in one period in which the first satellite apparatus provides a service for the communication apparatus located in the first region may be a sum of the first start time and time indicated by the service start time offset parameter (information B4).

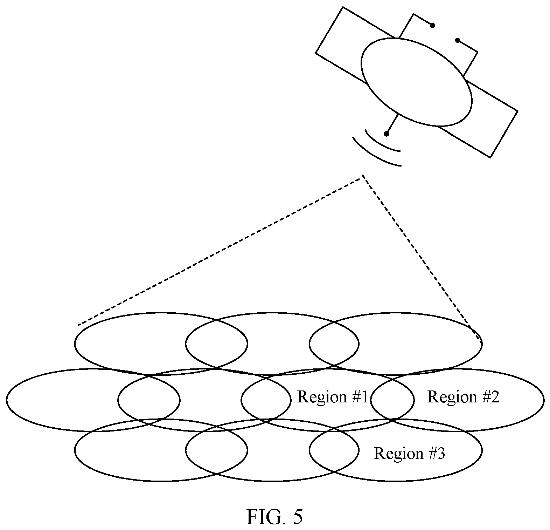

**FIG. 5** is an example of a possible diagram of a plurality of regions covered by beams of a first satellite apparatus. As shown in FIG. 5, the first satellite apparatus covers the plurality of regions, for example, a region #1, a region #2, and a region #3 shown in FIG. 5. Based on a scenario shown in FIG. 5, Table 1 shows a possible example of information included in the first configuration information. As shown in Table 1, the first configuration information may include information that indicates a region and a beam pattern (pattern) identifier, and one beam pattern identifier may be considered as an index of information about time in which the first satellite apparatus provides a service. A 2^{nd} row in Table 1 is used as an example for description. The region #1 is associated with a beam pattern #1, and information that indicates the region #1 may include an identifier #1 of a broadcast signal beam and/or an identifier #1 of a geographical location. The first communication apparatus may determine, based on the first configuration information, that information about time in which the first satellite apparatus provides a service for the region #1 is time information indicated by the beam pattern #1. Content of other rows is similar to that of the 2^{nd} row. Details are not described again. In Table 1, information in the first configuration information is shown in a form of a table. In actual application, the first configuration information may alternatively be in another form of an entry.

**Table 1 Possible examples of information included in first configuration information**

| Beam pattern (pattern) identifier | Information that indicates a region |
|---|---|
| Beam pattern #1 | Region #1 (an identifier #1 of a broadcast signal beam and/or an identifier #1 of a geographical location) |
| Beam pattern #2 | Region #2 (an identifier #2 of a broadcast signal beam and/or an identifier #2 of a geographical location) |
| Beam pattern #3 | Region #3 (an identifier #3 of a broadcast signal beam and/or an identifier #3 of a geographical location) |
| ... | ... |

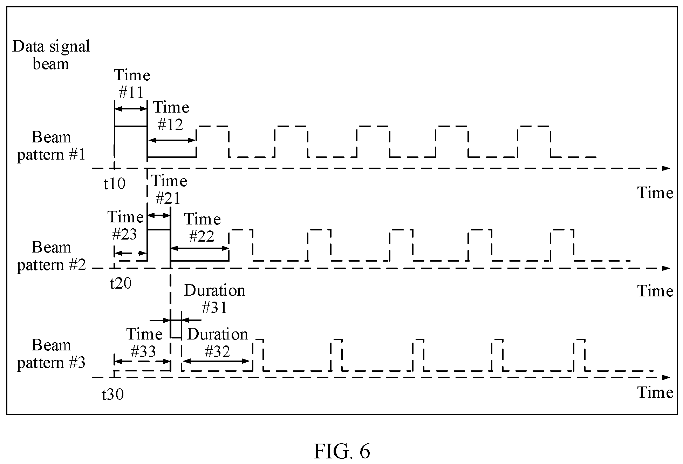

**FIG. 6** is an example of several possible diagrams of a data signal beam in the scenario in FIG. 5. As shown in FIG. 6, the first satellite apparatus provides services for the region #1, the region #2, and the region #3 in a time division manner.

Information about time in which the first satellite apparatus provides a data transmission service for the region #1 is shown in the beam pattern #1. A high level (namely, time #11) may be considered as the time in which the first satellite apparatus provides a data transmission service for the region #1. The time #11 may also be referred to as beam illumination duration, or may be referred to as beam hopping on duration (on duration). A time length of the time #11 is service duration in a period in which the first satellite apparatus provides a service for a communication apparatus located in the region #1, and may be determined based on the information B2. A low level (namely, time #12) may be considered as time in which the first satellite apparatus does not provide a data transmission service for the region #1. In the time #12, the communication apparatus in a region #11 is not allowed to perform data transmission (uplink and downlink transmission) with the first satellite apparatus.

For the region #1, the first satellite periodically provides a service for the region #1. The time #11 and the time #12 may be considered as one period, and a sum of duration of the time #11 and the time #12 may be considered as duration of one period in which the first satellite apparatus provides a service for the region #11. The sum of the time #11 and the time #12 is the period duration, and the period duration is the duration indicated by the information B1. t10 in the beam pattern #1 shown in FIG. 6 may be considered as first start time in the beam pattern #1. The first start time may be determined based on the period start time offset parameter (parameter B3). There may be duration between t10 in the beam pattern #1 shown in FIG. 6 and start time of the beam illumination duration. The duration is shown as 0 in the beam pattern #1, and the duration may be the duration indicated by the service start time offset parameter (parameter B4).

FIG. 6 shows an example of time in which the first satellite apparatus provides a data transmission service for the region #1 (data beam coverage #1). The time may include time in which the first satellite apparatus may provide an uplink data transmission service and/or a downlink data transmission service for the region #1. In actual application, time of the uplink and/or downlink data transmission service may be discontinuous, or may be discontinuous. In the example in FIG. 6, uplink data transmission time and downlink data transmission time are not distinguished.

Similarly, as shown in FIG. 6, information about time in which the first satellite apparatus provides a data transmission service for the region #2 is shown in the beam pattern #2. A high level (namely, time #21) may be considered as the time in which the first satellite apparatus provides a data transmission service for the region #2, and a low level (namely, time #22) may be considered as time in which the first satellite apparatus does not provide a data transmission service for the region #2. A time length of the time #21 is service duration in a period in which the first satellite apparatus provides a service for a communication apparatus located in the region #2, and may be determined based on the information B2. A sum of the time #21 and the time #22 is period duration, and the period duration is the duration indicated by the information B1. t20 in the beam pattern #2 shown in FIG. 6 may be considered as first start time in the beam pattern #2. The first start time may be determined based on the period start time offset parameter (parameter B3). There may be duration between t20 in the beam pattern #2 shown in FIG. 6 and start time of beam illumination duration. The duration is shown as time #23, and the time #23 may be the duration indicated by the service start time offset parameter (parameter B4).

Similarly, information about time in which the first satellite apparatus provides a data transmission service for the region #3 is shown in the beam pattern #3. A high level (namely, time #31) may be considered as the time in which the first satellite apparatus provides a data transmission service for the region #3, and a low level (namely, time #32) may be considered as time in which the first satellite apparatus does not provide a data transmission service for the region #3. A time length of the time #31 is service duration in a period in which the first satellite apparatus provides a service for a communication apparatus located in the region #3, and may be determined based on the information B2. A sum of the time #31 and the time #32 is period duration, and the period duration is the duration indicated by the information B1. t30 in the beam pattern #3 shown in FIG. 6 may be considered as first start time in the beam pattern #3. The first start time may be determined based on the period start time offset parameter (parameter B3). There may be duration between t30 in the beam pattern #3 shown in FIG. 6 and start time of beam illumination duration. The duration is shown as time #33, and the time #33 may be the duration indicated by the service start time offset parameter (parameter B4).

In a possible implementation, duration in which the first satellite apparatus provides a service for a communication apparatus in one region is associated with a payload of the region. For example, a payload amount of the region #1 belongs to a high payload range, a payload amount of the region #2 belongs to a medium payload range, and a payload amount of the region #3 belongs to a low payload range. Alternatively, a payload amount of the region #1 is greater than a payload amount of the region #2, and the payload amount of the region #2 is greater than a payload amount of the region #3. The time #11 is greater than the time #21, and the time #21 is greater than the time #31.

In another possible implementation, the first satellite apparatus may alternatively provide a data signal beam for each region in a frequency division or space division manner. For example, the time in which the first satellite apparatus provides a service and that is indicated in the beam pattern #1 and the time in which the first satellite apparatus provides a service and that is indicated in the beam pattern #2 may overlap. FIG. 6 shows an example in which the first satellite apparatus provides services for three regions in a time division manner.

The following describes, by using two examples, content that may be included in the first configuration information. In Example 1, an example in which the information that is included in the first configuration information and that indicates a region is an SSB index is used. In Example 2, an example in which the information that is included in the first configuration information and that indicates a region is identification information (for example, a geographical (geo) identity (identity, ID)) of a geographical location is used. In the following Example 1 and Example 2, the first configuration information may further include the period start time offset parameter (information B3) and/or the service start time offset parameter (information B4), which are not shown in the following examples.

**Example 1:** The information that is included in the first configuration information and that indicates a region is the SSB index, and the first configuration information may include the following content:

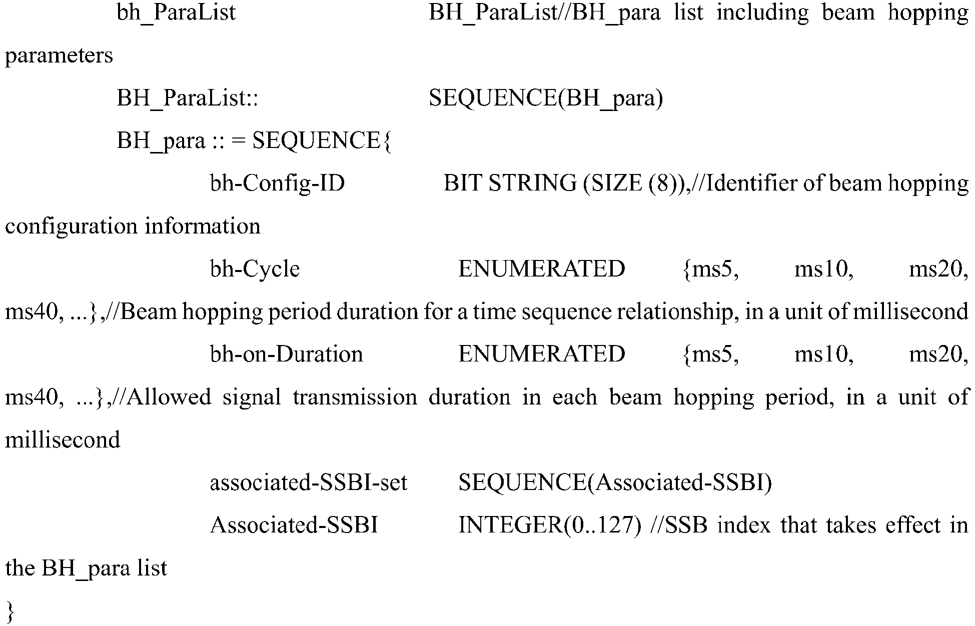

**Example 2:** The information that is included in the first configuration information and that indicates a region is the identification information of the geographical location, and the first configuration information may include the following content:

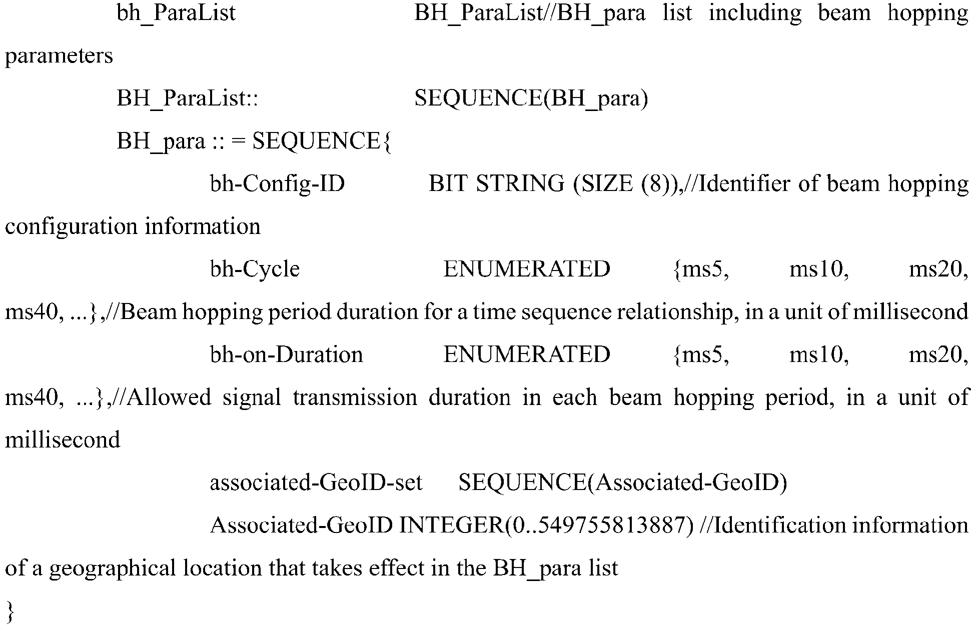

**Implementation** C: The first configuration information includes the information about the time in which the first satellite apparatus provides a broadcast signal beam.

In Implementation C, the information about the time in which the first satellite apparatus provides a broadcast signal beam may be understood as information about time in which the first satellite apparatus provides broadcast signal beam coverage for a region, or may be understood as information about time in which the first satellite apparatus sends a broadcast signal to the region, or may be understood as information about time in which a communication apparatus located in the region can receive a broadcast signal from the first satellite apparatus. For a region, within time in which the first satellite apparatus sends a broadcast signal to the region, a communication apparatus located in the region may monitor the broadcast signal. Within time in which the first satellite apparatus does not send a broadcast signal beam to the region, the communication apparatus located in the region may stop monitoring the broadcast signal, thereby reducing power consumption.

For a region, the first satellite apparatus may alternatively periodically provide a service for the region, for example, periodically send a broadcast signal to the region. For example, the region is the first region. The first configuration information may include one or more of the following: information (information C1) that indicates period duration in which the first satellite apparatus sends the broadcast signal to the first region; information (information C2) that indicates duration in which the first satellite apparatus sends the broadcast signal to the first region in one period; a period start time offset parameter (information C3) in which the first satellite apparatus sends a broadcast signal to the first region; or a service start time offset parameter (information C4) in a period in which the first satellite apparatus sends the broadcast signal to the first region. In this solution, the first configuration information may indicate, by using a small quantity of data bits, time in which the first satellite apparatus sends the broadcast signal, so that signaling overheads can be reduced.

**The information C1** is the information that indicates the period duration in which the first satellite apparatus sends the broadcast signal to the first region.

The first satellite apparatus may periodically provide the broadcast signal for the first region. A beam pattern of the broadcast signal beam may also be represented as a sweeping period of the broadcast signal beam. Different sweeping periods may be configured for different regions (for example, regions indicated by identification information of different broadcast signal beams, or regions indicated by identification information of different geographical locations). The information C1 may be understood as duration of one period in which the first satellite apparatus sends the broadcast signal to the first region. In embodiments of this application, duration of broadcast signal sending periods configured by the first satellite apparatus for two regions may be the same or may be different.

In a possible implementation, the first communication apparatus may obtain preset period duration. The information C1 may include information that indicates a relationship between the period duration in which the first satellite apparatus sends the broadcast signal to the first region and the preset period duration, or may be described as a period scaling multiple of a region (for example, a region indicated by identification information of a broadcast signal beam or a region indicated by identification information of a geographical location) in the NR protocol relative to the preset period duration (or a default sweeping period). For example, the period duration in which the first satellite apparatus sends the broadcast signal to the first region is twice the preset period duration. The second communication apparatus may indicate, through the first configuration information, information indicating that the period duration in which the first satellite apparatus sends the broadcast signal to the first region is two times the preset period duration. The first communication apparatus determines, based on the information indicating two times and the preset period duration, the period duration in which the first satellite apparatus sends the broadcast signal to the first region. In this way, the first communication apparatus may indicate, through a small quantity of signaling bits, the period duration in which the first satellite apparatus sends the broadcast signal to the first region. This solution can reduce signaling overheads.

In a possible implementation, the period duration in which the first satellite apparatus sends the broadcast signal to the first region is associated with a payload of the first region. For example, duration of one period in which the first satellite apparatus sends a broadcast signal beam to a region is inversely correlated with a payload of the region. For example, a larger payload of a region indicates shorter duration of one period in which the first satellite apparatus sends a broadcast signal to the region, that is, a higher frequency at which the first satellite apparatus sends a broadcast signal to the region. In other words, for example, a smaller payload of a region indicates longer duration of one period in which the first satellite apparatus sends a broadcast signal to the region, that is, a lower frequency at which the first satellite apparatus sends a broadcast signal to the region. For another example, several payload ranges may be set. A larger maximum value of a payload range associated with a region indicates shorter duration of one period in which the first satellite apparatus sends a broadcast signal to the region. In other words, a smaller maximum value of a payload range associated with a region indicates longer duration of one period in which the first satellite apparatus sends a broadcast signal to the region. The period duration in which the first satellite apparatus sends the broadcast signal is configured based on a factor like the payload of the first region, so that the configured period duration in which the first satellite apparatus sends the broadcast signal can be more appropriate, thereby satisfying a service requirement and reducing resource waste.

**The information C2** is the information that indicates the duration in which the first satellite apparatus sends a broadcast signal to the first region.

The first satellite apparatus may periodically send a broadcast signal to the first region, and the information C2 may be understood as information about duration in which the first satellite apparatus sends a broadcast signal to the first region in one period. In embodiments of this application, broadcast signal sending duration configured by the first satellite apparatus for two regions may be the same or may be different.

**The information C3** is the period start time offset parameter for the first satellite apparatus to send a broadcast signal to the first region.

The period start time offset parameter may indicate a start moment (or absolute start time) of one period in which the first satellite apparatus sends a broadcast signal to the first region. For differentiation, the absolute start time of the period may be referred to as second start time.

Alternatively, the period start time offset parameter may indicate duration. The second start time may be determined based on the period duration (information C1) of the period in which the first satellite apparatus sends a broadcast signal to the first region and the period start time offset parameter (information C3) for the first satellite apparatus to send a broadcast signal to the first region.

For example, a second specified condition is: [(System frame number×10)+Subframe number] modulo (Period duration (Information C1))=Service start time offset parameter. In this case, the second start time is subframe start time that satisfies the first specified condition. It should be noted that modulo is a modulo operator. The second specified condition may be a condition in embodiments of the present invention, or may be another condition. This is not specifically limited herein.

**The information C4** is the service start time offset parameter in the period in which the first satellite apparatus sends a broadcast signal to the first region.

The information C4 may alternatively be understood as a service start time offset parameter in one period in which the first satellite apparatus sends a broadcast signal to the first region.

The service start time in the period in which the first satellite apparatus sends a broadcast signal to the first region may be a sum of the second start time and time indicated by the service start time offset parameter (information C4).

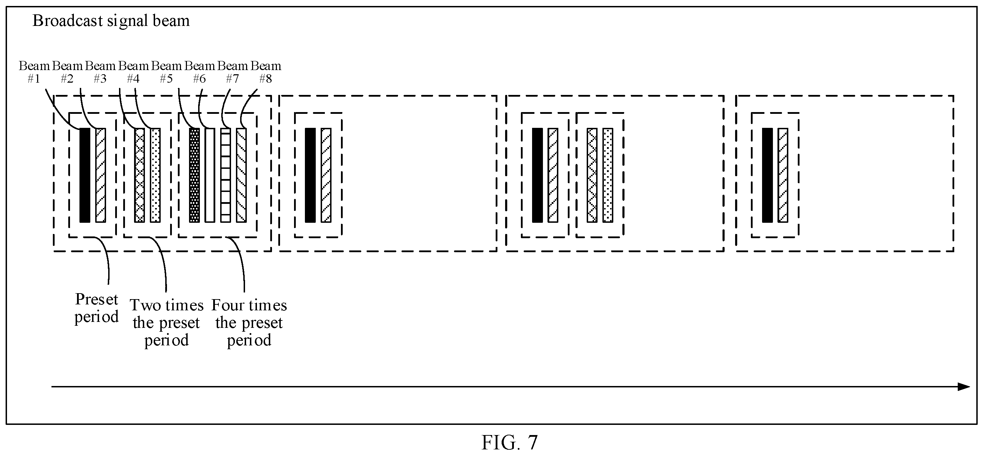

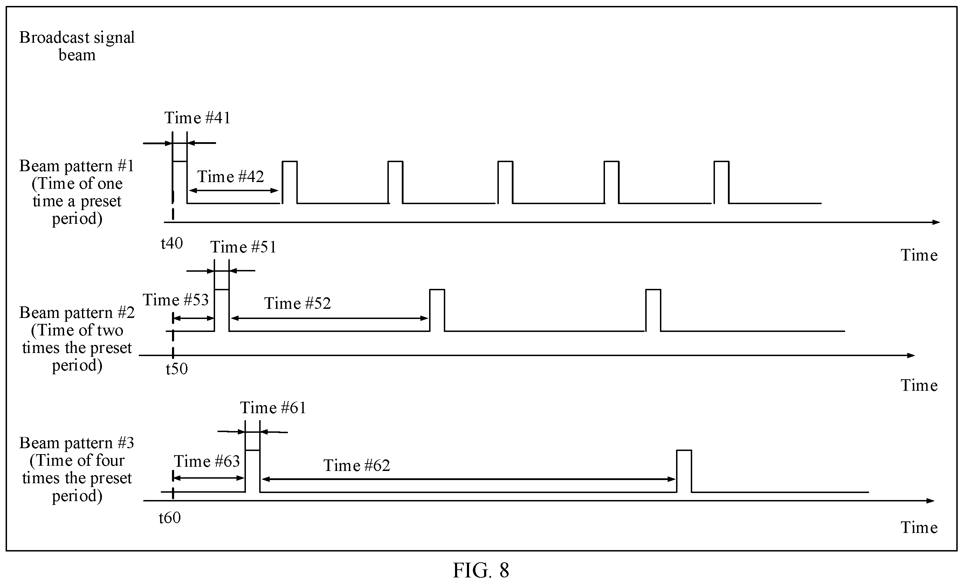

**FIG. 7** **and** **FIG. 8** show examples of several possible diagrams of broadcast signal beams. As shown in FIG. 7, a beam #1, a beam #2, a beam #3, a beam #4, a beam #5, a beam #6, a beam #7, and a beam #8 are all broadcast signal beams, and period duration of sending periods of the beam #1 and the beam #2 is equal to period duration of a preset period. It can be learned from FIG. 7 that the first satellite apparatus sends the beam #1 and the beam #2 in duration of each preset period. Similarly, period duration of sending periods of the beam #3 and the beam #4 is two times the period duration of the preset period. It can be learned from FIG. 7 that the first satellite apparatus sends the beam #3 and the beam #4 in duration of every two preset periods. Period duration of sending periods of the beam #5, the beam #6, the beam #7, and the beam #8 is four times the period duration of the preset period. It can be learned from FIG. 7 that the first satellite apparatus sends the beam #5, the beam #6, the beam #7, and the beam #8 in duration of every four preset periods.

**FIG. 8** shows an example of several possible diagrams of broadcast signal beams in the scenario in FIG. 5. As shown in FIG. 8, the first satellite apparatus separately sends broadcast signals to a region #1, a region #2, and a region #3 in a time division manner. Information about time in which the first satellite apparatus sends a broadcast signal to the region #1 is shown in a beam pattern #1. A high level (namely, time #41) may be considered as the time in which the first satellite apparatus sends a broadcast signal (or provides a broadcast signal beam) to the region #1. A time length of the time #41 is service duration in which the first satellite apparatus sends a broadcast signal to the region #1, and may be determined based on the information C2. A low level (namely, time #42) may be considered as time in which the first satellite apparatus does not send a broadcast signal to the region #1. The time #41 and the time #42 may be considered as one period. For the region #1, the first satellite periodically sends a broadcast signal to the region #1. A sum of the time #41 and the time #42 is period duration, and the period duration is the duration indicated by the information C1. t40 in the beam pattern #1 shown in FIG. 8 may be considered as second start time in the beam pattern #1. The second start time may be determined based on the period start time offset parameter (parameter C3). There may be duration between t40 in the beam pattern #1 shown in FIG. 8 and start time of beam illumination duration. The duration is shown as 0 in the beam pattern #1, and the duration may be the duration indicated by the service start time offset parameter (parameter C4).

Similarly, as shown in FIG. 6, information about time in which the first satellite apparatus sends a broadcast signal to the region #2 is shown in the beam pattern #2. A high level (namely, time #51) may be considered as service time in which the first satellite apparatus sends a broadcast signal to the region #2, and a low level (namely, time #52) may be considered as time in which the first satellite apparatus does not send a broadcast signal to the region #2. A time length of the time #51 is service duration in which the first satellite apparatus sends a broadcast signal to the region #2, and may be determined based on the information C2. A sum of the time #51 and the time #52 is period duration, and the period duration is the duration indicated by the information C1. t50 in the beam pattern #2 shown in FIG. 8 may be considered as second start time in the beam pattern #2. The second start time may be determined based on the period start time offset parameter (parameter C3). There may be duration between t50 in the beam pattern #2 shown in FIG. 8 and start time of beam illumination duration. The duration is shown as time #53 in the beam pattern #2, and the time #53 may be the duration indicated by the service start time offset parameter (parameter C4).

Similarly, information about time in which the first satellite apparatus sends a broadcast signal to the region #3 is shown in the beam pattern #3. A high level (namely, time #61) may be considered as service time in which the first satellite apparatus sends a broadcast signal to the region #3, and a low level (namely, time #62) may be considered as service time in which the first satellite apparatus does not send a broadcast signal to the region #3. A time length of the time #61 is service duration in which the first satellite apparatus sends a broadcast signal to the region #3, and may be determined based on the information C2. A sum of the time #61 and the time #62 is period duration, and the period duration is the duration indicated by the information C1. t60 in the beam pattern #3 shown in FIG. 8 may be considered as second start time in the beam pattern #3. The second start time may be determined based on the period start time offset parameter (parameter C3). There may be duration between t60 in the beam pattern #3 shown in FIG. 8 and start time of beam illumination duration. The duration is shown as time #63 in the beam pattern #3, and the time #63 may be the duration indicated by the service start time offset parameter (parameter C4).

In a possible implementation, duration of a period in which the first satellite apparatus sends a broadcast signal to a region is associated with a payload of the region. For example, a payload amount of the region #1 belongs to a high payload range, a payload amount of the region #2 belongs to a medium payload range, and a payload amount of the region #3 belongs to a low payload range. Alternatively, a payload amount of the region #1 is greater than a payload amount of the region #2, and the payload amount of the region #2 is greater than a payload amount of the region #3. In this case, the period duration (the sum of the time #41 and the time #42) of a broadcast signal sending period of the region #1 is less than the period duration (the sum of the time #51 and the time #52) of a broadcast signal sending period of the region #2, and the period duration (the sum of the time #51 and the time #52) of the broadcast signal sending period of the region #2 is less than the period duration (the sum of the time #61 and the time #62) of a broadcast signal sending period of the region #3.

In another possible implementation, the first satellite apparatus may alternatively provide a broadcast signal beam for each region in a frequency division or space division manner. For example, the time in which the first satellite apparatus sends a broadcast signal and that is indicated in the beam pattern #1 and the time in which the first satellite apparatus sends a broadcast signal and that is indicated in the beam pattern #2 may overlap. FIG. 8 is an example in which the first satellite apparatus sends broadcast signals to the three regions in a time division manner.

In embodiments of this application, the examples shown in FIG. 8 and FIG. 6 may be combined. In this case, the beam pattern #1 may include two beam patterns: a beam pattern (the beam pattern #1 shown in FIG. 6) that is shown in FIG. 6 and that is used by the first satellite apparatus to provide a service for the communication apparatus in the region #1, and a beam pattern (the beam pattern #1 shown in FIG. 8) that is used by the first satellite apparatus to send a broadcast signal to the region #1. The first satellite apparatus determines, based on the beam pattern #1 shown in FIG. 6, time in which the first satellite apparatus provides a data beam for the region #1, and determines, based on the beam pattern #1 shown in FIG. 8, time in which the first satellite apparatus sends a broadcast signal to the region #1. Content of the beam pattern #2 and the beam pattern #3 is similar to that of the beam pattern #1. Details are not described again.

The following describes, by using two examples, content that may be included in the first configuration information. In Example 1, an example in which the information that is included in the first configuration information and that indicates a region is an SSB index is used. In Example 2, an example in which the information that is included in the first configuration information and that indicates a region is identification information (for example, a geographical identity (geo ID)) of a geographical location is used. In the following Example 1 and Example 2, the first configuration information may further include the period start time offset parameter (information C3) and/or the service start time offset parameter (information C4), which are not shown in the following examples.

Example 1: The information that is included in the first configuration information and that indicates a region is the SSB index, and the first configuration information may include the following content:

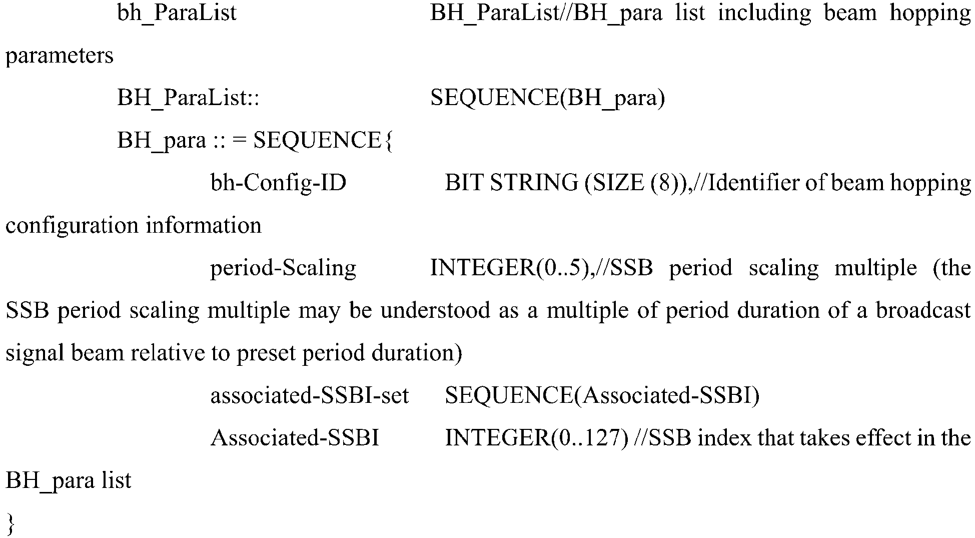

Example 2: The information that is included in the first configuration information and that indicates a region is the identification information of the geographical location, and the first configuration information may include the following content:

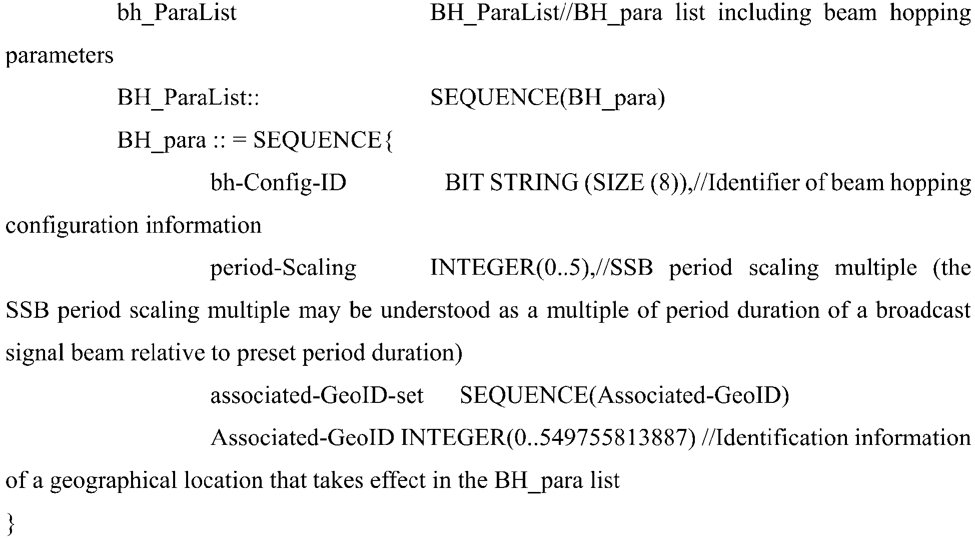

Step 402: The first communication apparatus obtains first information.

The first information indicates the first region. The first region includes a region in which the first communication apparatus is currently located, and the first region belongs to the at least one region.

For example, the first information may include the identification information of the broadcast signal beam. For example, the first communication apparatus may receive a broadcast signal in the region in which the first communication apparatus is currently located or a neighboring region of the region in which the first communication apparatus is currently located, and obtain the identification information of the broadcast signal beam, for example, an identifier of an SSB, from the broadcast signal. The first communication apparatus may use the obtained identification information (for example, the identifier of the SSB) of the broadcast signal beam as the first information.

The first information may also include the identification information of the geographical location. For example, the first communication apparatus may obtain the identification information of the geographical location in the region in which the first communication apparatus is currently located or the neighboring region of the region in which the first communication apparatus is currently located. For example, the first communication apparatus obtains the identification information of the geographical location of the first communication apparatus by using a positioning solution (for example, the first communication apparatus receives the identification information of the geographical location of the first communication apparatus from an apparatus having a positioning function). The first communication apparatus may use the obtained identification information of the geographical location as the first information.

In the solution provided in embodiments of this application, service time information of the first satellite apparatus may be configured at a granularity of the broadcast signal beam, or service time information of the first satellite apparatus may be configured at a granularity of the identification information of the geographical location. In this way, the first communication apparatus may easily obtain the first information, and the service time information of the first satellite apparatus may be configured at a small granularity, so that service time of the first satellite apparatus can better match a factor like service load of a region, thereby optimizing configuration and reducing resource waste.

**Step 403:** The first communication apparatus determines first time information based on the first configuration information and the first information.

The first time information includes information about time in which the first satellite apparatus provides a service for the communication apparatus located in the first region.

The first time information may be time information that is associated with the first region and that is queried by the first communication apparatus from the first configuration information. For example, with reference to Table 1, the first information includes the identifier #1 of the broadcast signal beam and/or the identifier #1 of the geographical location. The first communication apparatus may find that an identifier of a beam pattern associated with the first information is the beam pattern #1, and then determine the first time information based on the beam pattern #1.

In a possible implementation, the first time information may include: information about time in which the first satellite apparatus sends a broadcast signal to the first region, and/or information about time in which the first satellite apparatus performs data transmission with the communication apparatus located in the first region.

**Step 404:** The first communication apparatus performs communication based on the first time information.

In step 404, in a possible implementation, the first time information may include the information about the time in which the first satellite apparatus sends a broadcast signal to the first region. In this way, the first communication apparatus may monitor the broadcast signal within the time indicated by the information about the time in which the first satellite apparatus sends a broadcast signal to the first region, or may stop monitoring the broadcast signal within time other than the time indicated by the information about the time in which the first satellite apparatus sends a broadcast signal to the first region. Therefore, power consumption can be reduced.

In step 404, in another possible implementation, the first time information may include the information about the time in which the first satellite apparatus performs data transmission with the communication apparatus located in the first region. In this way, the first communication apparatus may perform data transmission (for example, uplink transmission and/or downlink transmission) through the first satellite apparatus within time indicated by the information about the time in which the first satellite apparatus performs data transmission with the communication apparatus located in the first region, or may stop performing data transmission (for example, uplink transmission and downlink transmission) through the first satellite apparatus within time other than the time indicated by the information about the time in which the first satellite apparatus performs data transmission with the communication apparatus located in the first region. Therefore, power consumption can be reduced.

It can be learned from the solution provided in FIG. 4 that the first communication apparatus determines, based on the region in which the first communication apparatus is currently located, time in which the first satellite apparatus provides a service for the region, and then communicates with the first satellite apparatus within the time. In this solution, a network apparatus does not need to frequently send signaling used to update the information about the time in which the first satellite apparatus provides a service. Therefore, signaling overheads can be reduced, and overheads of reading signaling by the first communication apparatus can be reduced.

In addition, after moving to different regions, the first communication apparatus may identify, through the identification information of the broadcast signal beam and/or the identification information of the geographical location, corresponding time in which the first satellite apparatus provides services for the regions, so that signaling overheads caused by activating the service time that is of the first satellite apparatus and that corresponds to different regions can be reduced, thereby saving resources.

Moreover, in this solution, the service time configured by the first satellite apparatus for different regions may be different. For example, the service time may be set based on information such as a load of a region, so that time in which the first satellite apparatus provides a service can better match a requirement of the region.

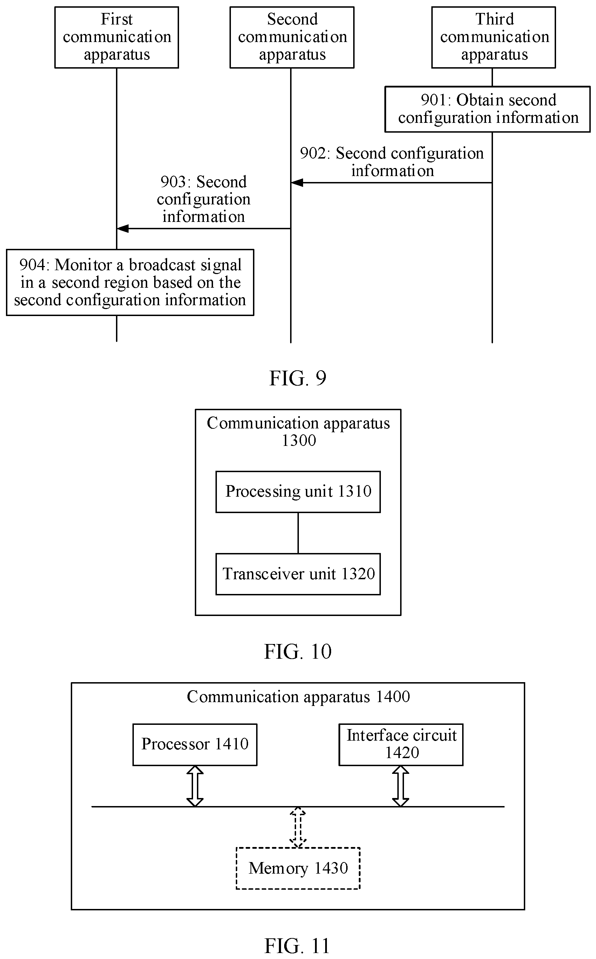

Based on content shown in FIG. 2A, FIG. 2B, FIG. 3A, FIG. 3B, FIG. 4, FIG. 5, FIG. 6, FIG. 7, and FIG. 8 and the foregoing other content, FIG. 9 is a possible schematic flowchart of an example of a communication method according to an embodiment of this application. FIG. 9 may be considered as an extended implementation of FIG. 4. In FIG. 9, interaction between a first communication apparatus, a second communication apparatus, a first satellite apparatus, and a second satellite apparatus is used as an example for description. The second satellite apparatus in embodiments of this application may be the satellite in FIG. 2A, FIG. 2B, FIG. 3A, or FIG. 3B, or a chip system inside the satellite. A third communication apparatus in embodiments of this application may be the network device in FIG. 2A, FIG. 2B, FIG. 3A, or FIG. 3B, or a chip system inside the network device. For the first satellite apparatus, the first communication apparatus, and the second communication apparatus, refer to related descriptions in FIG. 4. Details are not described again.

As shown in FIG. 9, the method includes step 901, step 902, step 903, and step 904. The following provides descriptions with reference to the accompanying drawings.

**Step 901:** The third communication apparatus obtains second configuration information.

The second configuration information indicates information about time in which the second satellite apparatus provides a service for a communication apparatus in a second region. The second region belongs to a neighboring region of the first region.

The second configuration information may include, for example, information that indicates period duration in which the second satellite apparatus sends a broadcast signal to the second region, and/or information that indicates the second region. For the information that indicates the period duration in which the second satellite apparatus sends the broadcast signal to the second region, refer to the information C1. Similar details are not described again. For the information that indicates the second region, refer to related descriptions in Implementation A. Similar details are not described again.

**Step 902:** The third communication apparatus sends the second configuration information.

Correspondingly, the second communication apparatus receives the second configuration information.

**Step 903:** The second communication apparatus sends the second configuration information.

Correspondingly, the first communication apparatus receives the second configuration information.

**Step 904:** The first communication apparatus monitors a broadcast signal in the second region based on the second configuration information.

For example, the first communication apparatus may monitor the broadcast signal in the second region (or scan a broadcast signal beam of the second region) within time corresponding to the time information indicated by the second configuration information. For another example, the first communication apparatus may stop monitoring the broadcast signal in the second region in time other than the time indicated by the second configuration information, so that power consumption can be reduced.

The region in which the first communication apparatus is currently located may include one or more neighboring regions. When the first communication apparatus is located in different regions, different neighboring regions may also be included. If the first communication apparatus performs beam sweeping on all neighboring regions by using a same measurement frequency, coverage time of broadcast signal beams in different neighboring regions may be different. As a result, a large quantity of invalid measurements are caused on a side of the first communication apparatus. In the solution provided in FIG. 9, for the neighboring region of the first communication apparatus: the second region, the first communication apparatus may perform beam sweeping based on time in which the second satellite apparatus provides a broadcast signal beam for the second region, so that invalid beam sweeping of the first communication apparatus can be reduced, and power consumption can be reduced.

It may be understood that, to implement functions in the foregoing embodiments, the first communication apparatus and the second communication apparatus include corresponding hardware structures and/or software modules for performing each function. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on specific application scenarios and design constraint conditions of the technical solutions.

**FIG. 10 and FIG. 11** each are a diagram of a possible structure of a communication apparatus according to an embodiment of this application. These communication apparatuses may be configured to implement functions of the first communication apparatus or the second communication apparatus in the foregoing method embodiments. Therefore, beneficial effects of the foregoing method embodiments can also be achieved. In embodiments of this application, the communication apparatus may be the terminal shown in FIG. 2A, FIG. 2B, FIG. 3A, or FIG. 3B, or may be the network device (for example, the RAN node) shown in FIG. 2A, FIG. 2B, FIG. 3A, or FIG. 3B, or may be a module (for example, a chip) used in the terminal or the network device.

As shown in FIG. 10, a communication apparatus 1300 includes a processing unit 1310 and a transceiver unit 1320. The communication apparatus 1300 is configured to implement functions of the first communication apparatus or the second communication apparatus in the method embodiment shown in FIG. 4 or FIG. 9.

When the communication apparatus 1300 is configured to implement the functions of the first communication apparatus in the method embodiment shown in FIG. 4 or FIG. 9, the processing unit 1310 is configured to: obtain first configuration information through the transceiver unit 1320; obtain first information; determine first time information based on the first configuration information and the first information; and perform communication based on the first time information.

In a possible implementation, when the communication apparatus 1300 is configured to implement the functions of the first communication apparatus in the method embodiment shown in FIG. 4 or FIG. 9, the processing unit 1310 is further configured to: obtain second configuration information; and monitor a broadcast signal in the second region within time corresponding to the time information indicated by the second configuration information.

When the communication apparatus 1300 is configured to implement the functions of the second communication apparatus in the method embodiment shown in FIG. 4 or FIG. 9, the processing unit 1310 is configured to: obtain first configuration information; and send the first configuration information through the transceiver unit 1320.

In a possible implementation, when the communication apparatus 1300 is configured to implement the functions of the second communication apparatus in the method embodiment shown in FIG. 4 or FIG. 9, the processing unit 1310 is further configured to: obtain second configuration information through the transceiver unit 1320; and send the second configuration information through the transceiver unit 1320.

For more detailed descriptions of the processing unit 1310 and the transceiver unit 1320, refer to the related descriptions in the method embodiment shown in FIG. 4 or FIG. 9.

As shown in FIG. 11, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4 or FIG. 9, the processor 1410 is configured to implement a function of the processing unit 1310, and the interface circuit 1420 is configured to implement a function of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station.

When the communication apparatus is a chip used in a base station, the chip in the base station implements the functions of the network apparatus in the foregoing method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or may be any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be disposed in a base station or a terminal. The processor and the storage medium may alternatively exist in a base station or a terminal as discrete components.

All or some of the foregoing embodiments may be implemented by using software, hardware, firmware, or any combination thereof. When embodiments are implemented by software, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, numeric numbers such as "first" and "second", or letter numbers such as "Implementation A", "Implementation B", and "Implementation C") in embodiments of this application are merely for differentiation for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applied to a first communication apparatus, and the method comprises:
obtaining first configuration information, wherein the first configuration information indicates information about time in which a first satellite apparatus provides a service for a communication apparatus in at least one region;
obtaining first information, wherein the first information indicates a first region, the first region comprises a region in which the first communication apparatus is currently located, and the first region belongs to the at least one region;
determining first time information based on the first configuration information and the first information, wherein the first time information comprises information about time in which the first satellite apparatus provides a service for a communication apparatus located in the first region; and
performing communication based on the first time information.

2. The method according to claim 1, wherein the first information comprises identification information of a broadcast signal beam and/or identification information of a geographical location.

3. The method according to claim 1 or 2, wherein the first time information comprises information about time in which the first satellite apparatus performs data transmission with the communication apparatus located in the first region.

4. The method according to any one of claims 1 to 3, wherein the first configuration information comprises one or more of the following:
information that indicates the first region;
information that indicates period duration in which the first satellite apparatus provides a service for a communication apparatus located in the first region;
information that indicates service duration in a period in which the first satellite apparatus provides a service for the communication apparatus located in the first region;
a period start time offset parameter for the first satellite apparatus to provide a service for the communication apparatus located in the first region; or
a service start time offset parameter in a period in which the first satellite apparatus provides a service for the communication apparatus located in the first region.

5. The method according to any one of claims 1 to 4, wherein the first time information comprises information about time in which the first satellite apparatus sends a broadcast signal to the first region.

6. The method according to any one of claims 1 to 5, wherein the first configuration information comprises one or more of the following:
information that indicates the first region;
information that indicates period duration in which the first satellite apparatus sends the broadcast signal to the first region;
a period start time offset parameter for the first satellite apparatus to send the broadcast signal to the first region; or
a service start time offset parameter in a period in which the first satellite apparatus sends the broadcast signal to the first region.

7. The method according to claim 4 or 6, wherein the information that indicates the first region comprises identification information of a broadcast signal beam sent by the first satellite apparatus in the first region, and/or identification information of a geographical location of the first region.

8. The method according to any one of claims 1 to 7, wherein the method further comprises:
obtaining second configuration information, wherein the second configuration information indicates information about time in which a second satellite apparatus provides a service for a communication apparatus in a second region, and the second region belongs to a neighboring region of the first region; and
the method further comprises:
monitoring a broadcast signal in the second region within time corresponding to the time information indicated by the second configuration information.

9. A communication method, wherein the method is applied to a second communication apparatus, and the method comprises:
obtaining first configuration information, wherein the first configuration information indicates information about time in which a first satellite apparatus provides a service for a communication apparatus in at least one region; and
sending the first configuration information.

10. The method according to claim 9, wherein the first configuration information comprises one or more of the following:
information that indicates the first region;
information that indicates period duration in which the first satellite apparatus provides a service for a communication apparatus located in the first region;
information that indicates service duration in a period in which the first satellite apparatus provides a service for a communication apparatus located in the first region;
a period start time offset parameter for the first satellite apparatus to provide a service for a communication apparatus located in the first region;
a service start time offset parameter in a period in which the first satellite apparatus provides a service for a communication apparatus located in the first region;
information that indicates period duration in which the first satellite apparatus sends a broadcast signal to the first region;
a period start time offset parameter for the first satellite apparatus to send a broadcast signal to the first region; or
a service start time offset parameter in a period in which the first satellite apparatus sends a broadcast signal to the first region.

11. The method according to claim 10, wherein the information that indicates the first region comprises identification information of a broadcast signal beam sent by the first satellite apparatus in the first region, and/or identification information of a geographical location of the first region.

12. The method according to any one of claims 9 to 11, wherein the method further comprises:
obtaining second configuration information, wherein the second configuration information indicates information about time in which a second satellite apparatus provides a service for a communication apparatus in a second region, and the second region belongs to a neighboring region of the first region; and
sending the second configuration information.

13. A communication apparatus, wherein the communication apparatus comprises a processor and an interface circuit; and
the processor is configured to perform the following operations through the interface circuit:
obtaining first configuration information, wherein the first configuration information indicates information about time in which a first satellite apparatus provides a service for a communication apparatus in at least one region;
obtaining first information, wherein the first information indicates a first region, the first region comprises a region in which the first communication apparatus is currently located, and the first region belongs to the at least one region;
determining first time information based on the first configuration information and the first information, wherein the first time information comprises information about time in which the first satellite apparatus provides a service for a communication apparatus located in the first region; and
performing communication based on the first time information.

14. The communication apparatus according to claim 13, wherein the first information comprises identification information of a broadcast signal beam and/or identification information of a geographical location.

15. The communication apparatus according to claim 13 or 14, wherein the first time information comprises information about time in which the first satellite apparatus performs data transmission with the communication apparatus located in the first region.

16. The communication apparatus according to any one of claims 13 to 15, wherein the first configuration information comprises one or more of the following:
information that indicates the first region;
information that indicates period duration in which the first satellite apparatus provides a service for a communication apparatus located in the first region;
information that indicates service duration in a period in which the first satellite apparatus provides a service for the communication apparatus located in the first region;
a period start time offset parameter for the first satellite apparatus to provide a service for the communication apparatus located in the first region; or
a service start time offset parameter in a period in which the first satellite apparatus provides a service for the communication apparatus located in the first region.

17. The communication apparatus according to any one of claims 13 to 16, wherein the first time information comprises information about time in which the first satellite apparatus sends a broadcast signal to the first region.

18. The communication apparatus according to any one of claims 13 to 17, wherein the first configuration information comprises one or more of the following:
the information that indicates the first region;
information that indicates period duration in which the first satellite apparatus sends the broadcast signal to the first region;
a period start time offset parameter for the first satellite apparatus to send the broadcast signal to the first region; or
a service start time offset parameter in a period in which the first satellite apparatus sends the broadcast signal to the first region.

19. The communication apparatus according to claim 16 or 18, wherein the information that indicates the first region comprises identification information of a broadcast signal beam sent by the first satellite apparatus in the first region, and/or identification information of a geographical location of the first region.

20. The communication apparatus according to any one of claims 13 to 19, wherein the processor is further configured to:
obtain second configuration information, wherein the second configuration information indicates information about time in which a second satellite apparatus provides a service for a communication apparatus in a second region, and the second region belongs to a neighboring region of the first region; and
monitor a broadcast signal in the second region within time corresponding to the time information indicated by the second configuration information.

21. A communication apparatus, wherein the communication apparatus comprises a processor and an interface circuit; and
the processor is configured to:
obtain first configuration information, wherein the first configuration information indicates information about time in which a first satellite apparatus provides a service for a communication apparatus in at least one region; and
send the first configuration information through the interface circuit.

22. The communication apparatus according to claim 21, wherein the first configuration information comprises one or more of the following:
information that indicates the first region;
information that indicates period duration in which the first satellite apparatus provides a service for a communication apparatus located in the first region;
information that indicates service duration in a period in which the first satellite apparatus provides a service for a communication apparatus located in the first region;
a period start time offset parameter for the first satellite apparatus to provide a service for a communication apparatus located in the first region;
a service start time offset parameter in a period in which the first satellite apparatus provides a service for a communication apparatus located in the first region;
information that indicates period duration in which the first satellite apparatus sends a broadcast signal to the first region;
a period start time offset parameter for the first satellite apparatus to send a broadcast signal to the first region; or
a service start time offset parameter in a period in which the first satellite apparatus sends a broadcast signal to the first region.

23. The communication apparatus according to claim 21 or 22, wherein the information that indicates the first region comprises identification information of a broadcast signal beam sent by the first satellite apparatus in the first region, and/or identification information of a geographical location of the first region.

24. The communication apparatus according to any one of claims 21 to 23, wherein the processor is further configured to:
obtain second configuration information, wherein the second configuration information indicates information about time in which a second satellite apparatus provides a service for a communication apparatus in a second region, and the second region belongs to a neighboring region of the first region; and
send the second configuration information through the interface circuit.

25. A communication apparatus, comprising a module configured to perform the method according to any one of claims 1 to 8 or a module configured to perform the method according to any one of claims 9 to 12.

26. A communication apparatus, comprising a processor, wherein the processor is configured to implement, through a logic circuit or by executing code instructions, the method according to any one of claims 1 to 8 or the method according to any one of claims 9 to 12.

27. A computer-readable storage medium, wherein the storage medium stores a computer program or instructions, and when the computer program or the instructions are executed by a communication apparatus, the method according to any one of claims 1 to 8 or the method according to any one of claims 9 to 12 is implemented.

28. A computer program product, wherein the computer program product stores a computer program, the computer program comprises program instructions, and when the program instructions are executed by a computer, the computer is enabled to perform the method according to any one of claims 1 to 8 or the method according to any one of claims 9 to 12.
